# EUROPEAN PATENT APPLICATION

(11) **EP 4 468 803 A1**
(43) Date of publication of application: **27.11.2024**
(21) Application number: 23752381.6
(22) Date of filing: 08.02.2023
(51) Int. Cl.: H04W 72/04

(54) **DATA TRANSMISSION METHOD AND COMMUNICATION APPARATUS**

(30) Priority: 11.02.2022 CN 202210129555
(71) Applicant: Huawei Technologies Co., Ltd., Shenzhen, Guangdong 518129 (CN)
(72) Inventor: LI, Tie, Shenzhen, Guangdong 518129 (CN); ZHANG, Yongping, Shenzhen, Guangdong 518129 (CN); YU, Zheng, Shenzhen, Guangdong 518129 (CN); ZHANG, Xi, Shenzhen, Guangdong 518129 (CN)
(74) Representative: Gill Jennings & Every LLP
(86) International application number: PCT/CN2023/075043
(87) International publication number: WO 2023/151601

(57) **Abstract**

This application provides a communication method and a communication apparatus, and belongs to the communication field. The method includes: receiving multiple TCIs from a network device; receiving at least one message from the network device, where the at least one message is used to determine at least one TCI and at least two TCIs of the multiple TCIs, the at least one TCI is used for transmission of a first channel, and the at least two TCIs are used for transmission of a second channel; receiving and/or sending the first channel based on the at least one TCI; and/or receiving and/or sending the second channel based on the at least two TCIs. In this manner, a terminal device can determine, based on the at least one message, at least one TCI used for each channel. In this way, multiple TCIs in a multi-MTP scenario can be indicated in a unified manner, and flexibility of transmission of each channel can be improved.

## Description

This application claims priority to Chinese Patent Application No. 202210129555.0, filed with the China National Intellectual Property Administration on February 11, 2022 and entitled "DATA TRANSMISSION METHOD AND COMMUNICATION APPARATUS", which is incorporated herein by reference in its entirety.

### TECHNICAL FIELD

This application relates to the communication field, and more specifically, to a data transmission method and a communication apparatus.

### BACKGROUND

A multiple-input multiple-output (Multiple-Input Multiple-Output, MIMO) technology has been widely applied in a current wireless communication system. To improve reliability of the system, a multi-transmission reception point (Transmission Reception Point, TRP) transmission technology has been proposed. Further, based on a unified transmission configuration indicator (Transmission Configuration Indicator, TCI) framework, multi-TRP transmission can be enhanced.

A current unified TCI framework indicates a single TCI, and the single TCI is used for transmission of each channel. Such a solution leads to a lack of flexibility in transmission of each channel, and consequently, resource utilization of the communication system is low.

### SUMMARY

Embodiments of this application provide a communication solution, so that one or more TCIs used for at least two different channels can be indicated using at least one message, thereby implementing transmission of the at least two different channels, and improving resource utilization.

According to a first aspect of this application, a communication method is provided. The communication method may be performed by a terminal device. The method includes: receiving multiple TCIs from a network device; receiving at least one message from the network device, where the at least one message is used to determine at least one TCI and at least two TCIs of the multiple TCIs, the at least one TCI is used for transmission of a first channel, and the at least two TCIs are used for transmission of a second channel; receiving and/or sending the first channel based on the at least one TCI; and/or receiving and/or sending the second channel based on the at least two TCIs.

In this manner, the terminal device can determine, based on the at least one message, at least one TCI used for each channel. In this way, multiple TCIs in a multi-MTP scenario can be indicated in a unified manner, and flexibility of transmission of each channel can be improved.

In some embodiments of the first aspect, the at least one message includes a first message, and the first message indicates the at least one TCI and the at least two TCIs.

In this manner, the network device indicates, by using a single message, at least one TCI used for each of multiple channels. This can simplify an indication manner and reduce signaling overheads.

In some embodiments of the first aspect, the at least one message includes a second message and a third message, the second message indicates the at least one TCI, and the third message indicates the at least one TCI or the at least two TCIs.

In this manner, the network device separately indicates, by using multiple messages, at least one TCI used for each of the multiple channels, so that the terminal device can quickly and accurately determine at least one TCI used for each channel.

In some embodiments of the first aspect, the at least one message includes a fourth message and a fifth message, the fourth message indicates the at least one TCI, and the fifth message indicates at least another TCI. The method further includes: determining the at least one TCI based on the fourth message; and determining the at least two TCIs based on the fourth message and the fifth message.

In this manner, the network device indicates at least one TCI of each of the multiple channels by using a combination of multiple messages, so that a more flexible indication manner can be implemented, and flexible scheduling of a TCI indication by the network device is facilitated.

In some embodiments of the first aspect, the at least one message includes a sixth message, and the sixth message indicates at least a part of TCIs of the multiple TCIs. The method further includes: determining the at least one TCI and/or the at least two TCIs from at least the part of TCIs based on a preset criterion.

In this manner, the terminal device can select, based on the preset criterion, at least one TCI used for each channel, thereby improving indication flexibility.

In some embodiments of the first aspect, the preset criterion includes at least one of the following: respective identifiers of at least the part of TCIs; an order of at least the part of TCIs; respective activation time of at least the part of TCIs; an order of activation time of at least the part of TCIs; respective effective time of at least the part of TCIs; or an order of effective time of at least the part of TCIs.

In some embodiments of the first aspect, the method further includes: receiving a seventh message from the network device, where the seventh message indicates the preset criterion.

In some embodiments of the first aspect, the sixth message further indicates the preset criterion.

In this manner, the network device can configure, indicate, or notify the terminal device of the preset criterion used by the terminal device. This can ensure consistency of preset criteria between the network device and the terminal device.

In some embodiments of the first aspect, the method further includes: sending capability information to the network device, where the capability information indicates a preset criterion supported by the terminal device.

In this manner, the network device can obtain the capability information of the terminal device, and then determine the preset criterion based on the capability information, to ensure availability of the preset criterion on the terminal device.

According to a second aspect of this application, a communication method is provided. The communication method may be performed by a network device. The method includes: sending multiple TCIs to a terminal device; sending at least one message to the terminal device, where the at least one message is used to determine at least one TCI and at least two TCIs of the multiple TCIs, the at least one TCI is used for transmission of a first channel, and the at least two TCIs are used for transmission of a second channel; receiving and/or sending the first channel based on the at least one TCI; and/or receiving and/or sending the second channel based on the at least two TCIs.

In some embodiments of the second aspect, the at least one message includes a first message, and the first message indicates the at least one TCI and the at least two TCIs.

In some embodiments of the second aspect, the at least one message includes a second message and a third message, the second message indicates the at least one TCI, and the third message indicates the at least one TCI or the at least two TCIs.

In some embodiments of the second aspect, the at least one message includes a fourth message and a fifth message, the fourth message indicates the at least one TCI, and the fifth message indicates at least another TCI.

In some embodiments of the second aspect, the at least one message includes a sixth message, the sixth message indicates at least a part of TCIs of the multiple TCIs, and the sixth message is used by the terminal device to select the at least one TCI and/or the at least two TCIs from at least the part of TCIs based on a preset criterion.

In some embodiments of the second aspect, the preset criterion includes at least one of the following: respective identifiers of at least the part of TCIs; an order of at least the part of TCIs; respective activation time of at least the part of TCIs; an order of activation time of at least the part of TCIs; respective effective time of at least the part of TCIs; or an order of effective time of at least the part of TCIs.

In some embodiments of the second aspect, the method further includes: sending a seventh message to the terminal device, where the seventh message indicates the preset criterion.

In some embodiments of the second aspect, the sixth message further indicates the preset criterion.

In some embodiments of the second aspect, the method further includes: receiving capability information from the terminal device, where the capability information indicates a preset criterion supported by the terminal device.

According to a third aspect of this application, a communication apparatus is provided. The communication apparatus includes: a receiving module, configured to receive multiple TCIs from a network device. The receiving module is further configured to receive at least one message from the network device, where the at least one message is used to determine at least one TCI and at least two TCIs of the multiple TCIs, the at least one TCI is used for transmission of a first channel, and the at least two TCIs are used for transmission of a second channel. The receiving module and/or a sending module are/is configured to: receive and/or send the first channel based on the at least one TCI; and/or receive and/or send the second channel based on the at least two TCIs.

In some embodiments of the third aspect, the at least one message includes a first message, and the first message indicates the at least one TCI and the at least two TCIs.

In some embodiments of the third aspect, the at least one message includes a second message and a third message, the second message indicates the at least one TCI, and the third message indicates the at least one TCI or the at least two TCIs.

In some embodiments of the third aspect, the at least one message includes a fourth message and a fifth message, the fourth message indicates the at least one TCI, and the fifth message indicates at least another TCI. The apparatus further includes a determining module, configured to: determine the at least one TCI based on the fourth message; and determine the at least two TCIs based on the fourth message and the fifth message.

In some embodiments of the third aspect, the at least one message includes a sixth message, and the sixth message indicates at least a part of TCIs of the multiple TCIs. The apparatus further includes a determining module, configured to determine the at least one TCI and/or the at least two TCIs from at least the part of TCIs based on a preset criterion.

In some embodiments of the third aspect, the preset criterion includes at least one of the following: respective identifiers of at least the part of TCIs; an order of at least the part of TCIs; respective activation time of at least the part of TCIs; an order of activation time of at least the part of TCIs; respective effective time of at least the part of TCIs; or an order of effective time of at least the part of TCIs.

In some embodiments of the third aspect, the receiving module is further configured to receive a seventh message from the network device, where the seventh message indicates the preset criterion.

In some embodiments of the third aspect, the sixth message further indicates the preset criterion.

In some embodiments of the third aspect, the sending module is further configured to send capability information to the network device, where the capability information indicates a preset criterion supported by a terminal device.

In some embodiments of the third aspect, the communication apparatus is the terminal device.

According to a fourth aspect of this application, a communication apparatus is provided. The communication apparatus includes: a sending module, configured to send multiple TCIs to a terminal device. The sending module is further configured to send at least one message to the terminal device, where the at least one message is used to determine at least one TCI and at least two TCIs of the multiple TCIs, the at least one TCI is used for transmission of a first channel, and the at least two TCIs are used for transmission of a second channel. A receiving module and/or the sending module are/is configured to: receive and/or send the first channel based on the at least one TCI; and/or receive and/or send the second channel based on the at least two TCIs.

In some embodiments of the fourth aspect, the at least one message includes a first message, and the first message indicates the at least one TCI and the at least two TCIs.

In some embodiments of the fourth aspect, the at least one message includes a second message and a third message, the second message indicates the at least one TCI, and the third message indicates the at least one TCI or the at least two TCIs.

In some embodiments of the fourth aspect, the at least one message includes a fourth message and a fifth message, the fourth message indicates the at least one TCI, and the fifth message indicates at least another TCI.

In some embodiments of the fourth aspect, the at least one message includes a sixth message, the sixth message indicates at least a part of TCIs of the multiple TCIs, and the sixth message is used by the terminal device to select the at least one TCI and/or the at least two TCIs from at least the part of TCIs based on a preset criterion.

In some embodiments of the fourth aspect, the preset criterion includes at least one of the following: respective identifiers of at least the part of TCIs; an order of at least the part of TCIs; respective activation time of at least the part of TCIs; an order of activation time of at least the part of TCIs; respective effective time of at least the part of TCIs; or an order of effective time of at least the part of TCIs.

In some embodiments of the fourth aspect, the sending module is further configured to send a seventh message to the terminal device, where the seventh message indicates the preset criterion.

In some embodiments of the fourth aspect, the sixth message further indicates the preset criterion.

In some embodiments of the fourth aspect, the receiving module is further configured to receive capability information from the terminal device, where the capability information indicates a preset criterion supported by the terminal device.

In some embodiments of the fourth aspect, the communication apparatus is a network device.

According to a fifth aspect of this application, this application provides a communication apparatus. The communication apparatus includes modules or units configured to perform the method or the steps included in any one of the second aspect or the implementations of the second aspect. Optionally, the communication apparatus may be implemented as a network device.

According to a sixth aspect of this application, a communication apparatus is provided, including a transceiver, a processor, and a memory. The memory stores instructions executed by the processor. When the instructions are executed by the processor, the communication apparatus is enabled to implement the method or the steps included in any one of the first aspect or the implementations of the first aspect.

According to a seventh aspect of this application, a communication apparatus is provided, including a transceiver, a processor, and a memory. The memory stores instructions executed by the processor. When the instructions are executed by the processor, the communication apparatus is enabled to implement the method or the steps included in any one of the second aspect or the implementations of the second aspect.

According to an eighth aspect of this application, a computer-readable storage medium is provided. The computer-readable storage medium stores computer-executable instructions. When the computer-executable instructions are executed by a processor, an operation of the method according to any one of the first aspect or embodiments of the first aspect is implemented, or an operation of the method according to any one of the second aspect or embodiments of the second aspect is implemented.

According to a ninth aspect of this application, a chip or a chip system is provided. The chip or the chip system includes a processing circuit, configured to perform an operation of the method according to any one of the first aspect or embodiments of the first aspect, or implement an operation of the method according to any one of the second aspect or embodiments of the second aspect.

According to a tenth aspect of this application, a computer program or a computer program product is provided. The computer program or the computer program product is tangibly stored in a computer-readable medium and includes computer-executable instructions. When the computer-executable instructions are executed, an operation of the method according to any one of the first aspect or embodiments of the first aspect is implemented, or an operation of the method according to any one of the second aspect or embodiments of the second aspect is implemented.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a diagram of a scenario in which some embodiments of this application may be implemented;
FIG. 2 is a signaling interaction diagram of a communication process according to some embodiments of this application;
FIG. 3 is a diagram of a first message according to some embodiments of this application;
FIG. 4 is another diagram of a first message according to some embodiments of this application;
FIG. 5 is a diagram of a combination of a second message and a third message according to some embodiments of this application;
FIG. 6 is another diagram of a combination of a second message and a third message according to some embodiments of this application;
FIG. 7 is a diagram of a combination of a fourth message and a fifth message according to some embodiments of this application;
FIG. 8 is a diagram of a sixth message according to some embodiments of this application;
FIG. 9 is a diagram of a combination of a MAC-CE and DCI according to some embodiments of this application;
FIG. 10 is a diagram of a combination of two sixth messages according to some embodiments of this application;
FIG. 11 is a schematic block diagram of a communication apparatus according to some embodiments of this application;
FIG. 12 is another schematic block diagram of a communication apparatus according to some embodiments of this application; and
FIG. 13 is a schematic block diagram of an example device that may be configured to implement an embodiment of this application.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the scope of the protection of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this application may be implemented according to any appropriate communication protocol, including but not limited to cellular communication protocols such as 3rd generation (3rd Generation, 3G), 4th generation (4G), 5th generation (5G), and 6th generation (6G), wireless local area network communication protocols such as the Institute of Electrical and Electronics Engineers (Institute of Electrical and Electronics Engineers, IEEE) 802.11, and/or any other protocols currently known or developed in the future.

Technical solutions in embodiments of this application are applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA 2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation system or a new radio (New Radio, NR) system, or a future evolved 6th generation communication system.

The term "terminal device" in this application refers to any terminal device that can perform wired or wireless communication with a network device or between terminal devices. The terminal device may be sometimes referred to as user equipment (User Equipment, UE). The terminal device may be any type of mobile terminal, fixed terminal, or portable terminal. In an example, the terminal device may include a mobile phone, a station, a unit, a device, a mobile terminal (Mobile Terminal, MT), a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device, a terminal device in a 5G network, any terminal device in an evolved public land mobile network (Public Land Mobile Network, PLMN), another device that can be used for communication, or any combination thereof. This is not limited in embodiments of this application.

The term "network device" in this application is an entity or a node that may be configured to communicate with a terminal device, for example, may be an access network device. The access network device may be an apparatus that is deployed in a radio access network and that provides a wireless communication function for a mobile terminal. For example, the access network device may be a radio access network (Radio Access Network, RAN) network device. The access network device may include various types of base stations. For example, the access network device may include various forms of macro base stations, micro base stations, pico base stations, femto base stations, relay stations, access points, remote radio units (Remote Radio Units, RRUs), radio heads (Radio Heads, RHs), remote radio heads (Remote Radio Heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. For ease of description, in subsequent embodiments of this application, the foregoing apparatuses that provide a wireless communication function for a terminal device are collectively referred to as a network device. This is not specifically limited in embodiments of this application.

Embodiments of this application relate to a communication device. In an example communication system, the communication device may be a network device or a terminal device.

In embodiments of this application, a transmission configuration indicator (Transmission Configuration Indicator, TCI) state may indicate information related to quasi co-location (Quasi-Co-Location, QCL). A TCI may provide a time-frequency tracking parameter, a spatial filter parameter, and the like for the terminal device to receive a channel/signal. It may be understood that, in some scenarios, a TCI state may be used interchangeably with any one of the following terms: a TCI, a transmission reception point (Transmission Reception Point, TRP), a control resource set (control resource set, CORESET), a control resource set pool (CORESET Pool), and the like.

The QCL may be used for an implementation of the terminal device in a coordinated multi-point scenario. For example, for two antenna ports, if a large-scale channel characteristic of one port can be inferred from that of the other port, it may be considered that the two antenna ports have a QCL relationship. The large-scale channel characteristics may include a delay spread (delay spread), an average delay (average delay), a Doppler frequency shift (Doppler shift), a Doppler spread (Doppler spread), an average gain (average gain), a spatial receive beam parameter (Spatial Rx parameter), and the like. In an NR system, a QCL relationship may be classified into four types: QCL-TypeA (QCL-TypeA), QCL-TypeB (QCL-TypeB), QCL-TypeC (QCL-TypeC), and QCL-TypeD (QCL-TypeD). Descriptions of the types are as follows:
- 'QCL-TypeA': {Doppler shift, Doppler spread, average delay, delay spread};
- 'QCL-TypeB': {Doppler shift, Doppler spread};
- 'QCL-TypeC': {Doppler shift, average delay}; and
- 'QCL-TypeD': {Spatial Rx parameter}.

QCL relationships may be encapsulated as signaling parameters to be respectively used by an uplink channel/signal and a downlink channel/signal, for example, may be indicated using an uplink TCI, a downlink TCI, and/or a joint TCI. The uplink TCI indicates the uplink channel/signal, and uses only a spatial relationship, that is, QCL-TypeD. The downlink TCI indicates the downlink channel/signal, and includes the foregoing four QCL relationships, that is, QCL-TypeA, QCL-TypeB, QCL-TypeC, and QCL-TypeD. The joint TCI indicates the uplink channel/signal and the downlink channel/signal, and may reuse the downlink TCI, that is, includes the foregoing four QCL relationships: QCL-TypeA, QCL-TypeB, QCL-TypeC, and QCL-TypeD.

To improve experience of a user at a cell edge, multi-TRP transmission has been proposed and used for downlink transmission, for example, used for a physical downlink shared channel (Physical Downlink Shared Channel, PDSCH). A single piece of downlink control information (Downlink Control Information, DCI) may be used to schedule multiple TRPs, or multiple pieces of DCI may be used to schedule multiple TRPs, thereby enabling PDSCH enhancement. Similarly, multiple TRPs and/or multiple panels may be used to identify and specify a characteristic to improve reliability and robustness of a physical channel such as a physical downlink control channel (Physical Downlink Control Channel, PDCCH), a physical uplink control channel (Physical Uplink Control Channel, PUCCH), or a physical uplink shared channel (Physical Uplink Share Channel, PUSCH) other than the PDSCH.

The PDCCH is enhanced in a scheme such as time-division multiplexing (Time-Division Multiplexing, TDM) repetition, frequency-division multiplexing (Frequency-Division Multiplexing, FDM) repetition, or single frequency network (Single Frequency Network, SFN) space-division multiplexing repetition. Repetition refers to the same content. For the TDM repetition and the FDM repetition, two sets of search spaces (Search Spaces, SSs) may be associated, and transmission is performed on corresponding control resource sets (Control Resource Sets, CORESETs). For TDM PDCCH enhancement and FDM PDCCH enhancement, TCIs are respectively configured in the CORESETs in which the associated SS sets are located. For SFN PDCCH enhancement, a same PDCCH is simultaneously transmitted on two TRPs. Therefore, two TCIs are required to indicate a CORESET in which the PDCCH is located.

For PUCCH or PUSCH enhancement, a same PUCCH is supported to be repeatedly transmitted in a TDM scheme, a quantity of repetitions supported is 2, 4, 8, or 16, and a beam mapping scheme includes cyclical mapping and sequential mapping. For a PUCCH, two TCIs are indicated using a media access control (Media Access Control, MAC) control element (Control Element, CE). For a PUSCH, different sounding reference signals (sounding reference signals, SRSs) are respectively indicated using two single resource indicators (signal resource indicators, SRIs), and a TCI is obtained using a TCI interval of the SRSs.

As described above, different channels are respectively indicated in different schemes. This manner of respectively indicating the channels has poor flexibility, thereby causing high complexity.

A unified TCI framework has been proposed to replace the foregoing spatial relationship framework. A unified TCI involves multiple component carriers (Component Carriers, CCs), and multiple channels/signals can share the same resource pool.

The unified TCI pool is configured by radio resource control (Radio Resource Control, RRC). multiple CCs may share the TCI pool, or each CC may be allocated with a TCI pool. The TCI pool includes a joint TCI pool referenced by a joint TCI and a separate TCI pool referenced by a separate TCI. The separate TCI pool includes a downlink TCI pool and an uplink TCI pool. The downlink TCI pool includes a maximum of 128 downlink TCIs. The uplink TCI pool includes a maximum of 32 or 64 uplink TCIs. The joint TCI pool may reuse the downlink TCI pool of the separate TCI pool.

The unified TCI supports MAC-CE activation and DCI indication. However, the current unified TCI framework supports only a single-TRP scenario, in other words, the current unified TCI can indicate only one TCI. Therefore, the current unified TCI framework cannot be applied to a multi-TRP scenario.

To resolve the foregoing problem and another potential problem, this application provides a communication method, so that different quantities of TCIs can be used to correspond to different channels. In this way, flexibility can be improved, and resource utilization can be improved.

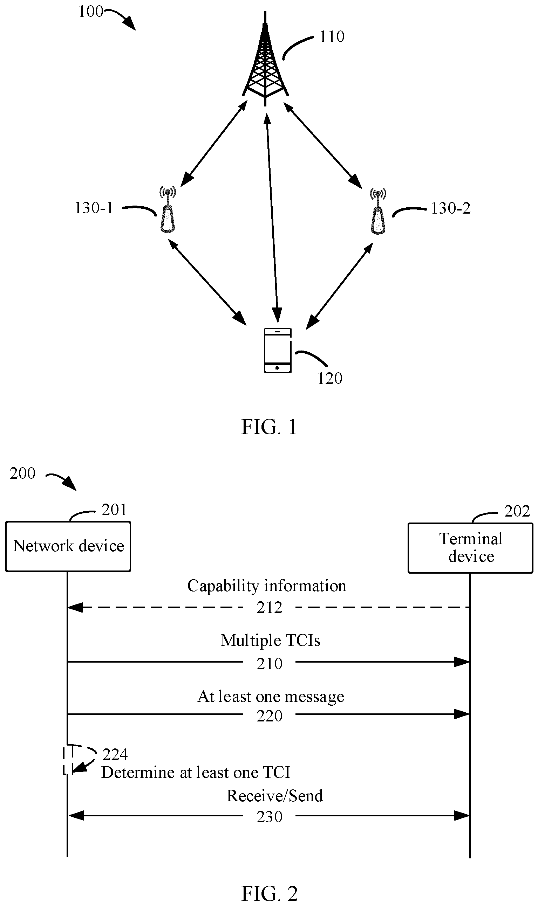

FIG. 1 is a diagram of a scenario 100 in which some embodiments of this application may be implemented. The scenario 100 includes an access network device 110 and a terminal device 120, and the access network device 110 and the terminal device 120 can communicate with each other. For example, the access network device 110 can provide a network access service for the terminal device 120.

In this embodiment of this application, a transmission link from the access network device 110 to the terminal device 120 may be referred to as a downlink transmission link (Downlink, DL), and a transmission link from the terminal device 120 to the access network device 110 may be referred to as an uplink transmission link (Uplink, UL).

For example, the scenario 100 may optionally further support multi-TRP transmission. It may be assumed that the access network device 110 is equipped with one or more TRPs. FIG. 1 shows a TRP 130-1 and a TRP 130-2. The TRP 130-1 and the TRP 130-2 may be associated with different CORESET pools, for example, a first CORESET pool is associated with the TRP 130-1, and a second CORESET pool is associated with the TRP 130-2. For ease of description, any one or both of the TRP 130-1 and the TRP 130-2 may be collectively referred to as a TRP 130. The terminal device 120 can communicate with the TRP 130-1 and the TRP 130-2. It may be understood that the terminal device 120 supports a single-TRP transmission mode and also supports a multi-TRP transmission mode.

It should be understood that the scenario 100 shown in FIG. 1 is merely an example. This embodiment of this application is applicable to another scenario. For example, the terminal device 120 may directly communicate with the access network device 110, or may perform multi-hop transmission through another relay (relay). For example, the terminal device 120 may be in a dual-connectivity or multi-connectivity scenario. In addition, it should be understood that, although the scenario shown in FIG. 1 involves transmission on the downlink transmission link and the uplink transmission link, this embodiment of this application is not limited thereto. For example, the scenario is applicable to a backhaul (backhaul) link, a sidelink (sidelink), and the like. Details are not listed one by one in this application.

FIG. 2 is a signaling interaction diagram of a communication process 200 according to some embodiments of this application. FIG. 2 relates to a network device 201 and a terminal device 202. For example, the network device 201 may be the access network device 110 or the TRP 130 shown in FIG. 1, and the terminal device 202 may be the terminal device 120 shown in FIG. 1.

In a process 210, the network device 201 sends multiple TCIs to the terminal device 202.

For example, the network device 201 may configure the multiple TCIs for the terminal device 202. The network device 201 may determine or generate the multiple TCIs in advance, and send the multiple TCIs to the terminal device 202 in a form of signaling. For example, signaling that carries the multiple TCIs may be higher layer signaling, for example, RRC signaling.

In some examples, the network device 201 may send the multiple TCIs by configuring a TCI pool for the terminal device 202, where the TCI pool includes the multiple TCIs. Optionally, the TCI pool may include an uplink TCI pool and a downlink TCI pool, an uplink TCI includes a first quantity of TCIs, the downlink TCI pool includes a second quantity of TCIs, and the first quantity may be equal or may not be equal to the second quantity. Optionally, the TCI pool may include a joint TCI pool. For example, the joint TCI pool includes a first quantity of TCIs. For example, the joint TCI pool is the same as the downlink TCI pool.

It should be noted that a quantity of the multiple TCIs is not limited in this embodiment of this application. For example, in some examples, the multiple TCIs include two TCIs, four TCIs, another quantity, or the like. Optionally, in some examples, the quantity of the multiple TCIs may be equal to a quantity of multiple TRPs, or may be less than or greater than the quantity of the multiple TRPs.

Optionally, as shown in a process 212 in FIG. 2, the terminal device 202 may send capability information to the network device 201. In this embodiment of this application, the capability information may include information associated with the TCI, or may include other information that is not shown.

In some examples, the capability information may include one or more of the following:
▪ whether multi-TPR transmission is supported;
▪ a maximum quantity of TPRs in the supported multi-TPR transmission;
▪ whether a unified TCI framework is supported;
▪ whether a signaling indication manner is supported to indicate a TCI used for each of multiple channels;
▪ whether the supported signaling indication manner is single-signaling or multi-signaling;
▪ signaling corresponding to the supported multi-signaling indication manner;
▪ whether a method of a preset criterion is supported; or
▪ what is included in the supported preset criterion.

For some content in the foregoing listed capability information, refer to related descriptions in the following embodiments.

In a process 220, the network device 201 sends at least one message to the terminal device 202, where the at least one message may indicate at least one TCI and at least two TCIs of the multiple TCIs. For example, the at least one message may indicate the at least one TCI used for a first channel and the at least two TCIs used for a second channel. For example, the at least one message may indicate N1 TCIs used for the first channel and N2 TCIs used for the second channel, where N1 and N2 are positive integers, N1≥1, and N2≥2. N1 and N2 may be equal or may not be equal.

It should be noted that the N1 TCIs used for the first channel and the N2 TCIs used for the second channel may be completely the same, or may be partially the same, or may be completely different. For example, it is assumed that a TCI set including the N1 TCIs used for the first channel and the N2 TCIs used for the second channel includes N TCIs. In this case, any one of the following may be met: N=N1=N2, N=max(N1, N2), N>max(N1, N2), or the like.

It may be understood that, although the first channel and the second channel are shown herein as two channels in total, this is not limited in this embodiment of this application. For example, the at least one message may indicate one or more TCIs used for each of the multiple channels. Four channels are used as an example. The at least one message may further indicate at least one TCI used for a third channel and at least one TCI used for a fourth channel.

The channel in this embodiment of this application may include a physical layer transmission channel between the network device 201 and the terminal device 202, for example, may include but is not limited to a PDCCH, a PDSCH, a PUCCH, a PUSCH, and the like. The channel in this embodiment of this application may further include a signal transmitted on a physical layer transmission channel, for example, may include a reference signal such as an SRS, a tracking reference signal (Tracking Reference Signal, TRS), or a channel state indicator reference signal (Channel State Indicator Reference Signal, CSI-RS). In some scenarios, the channel in this embodiment of this application may be understood as a "channel/signal". For brevity of illustration, the "channel" is used as a term in the following for description.

In this embodiment of this application, for example, a quantity of TCIs used for each channel is predefined or preconfigured. For example, the quantity of TCIs used for each channel may be shown in Table 1. In an example, an index may be carried in the signaling to indicate the quantity of TCIs of each channel.

**Table 1**

| Index | PDCCH | PDSCH | PUCCH | PUSCH |
|---|---|---|---|---|
| 0 | 1 | 1 | 1 | 1 |
| **1** | **1** | **2** | **1** | **1** |
| 2 | 2 | 1 | 1 | 1 |
| 3 | 2 | 2 | 1 | 1 |
| 4 | 1 | 1 | 1 | 2 |
| 5 | 1 | 2 | 1 | 2 |
| 6 | 2 | 1 | 1 | 2 |
| 7 | 2 | 2 | 1 | 2 |
| 8 | 1 | 1 | 2 | 1 |
| 9 | 1 | 2 | 2 | 1 |
| 10 | 2 | 1 | 2 | 1 |
| 11 | 2 | 2 | 2 | 1 |
| 12 | 1 | 1 | 2 | 2 |
| 13 | 1 | 2 | 2 | 2 |
| 14 | 2 | 1 | 2 | 2 |
| 15 | 2 | 2 | 2 | 2 |

For example, an index "1" indicates that one TCI is used for a PDCCH, two TCIs are used for a PDSCH, one TCI is used for a PUCCH, and one TCI is used for a PUSCH.

It should be noted that the foregoing Table 1 is merely an example. For example, a maximum quantity of TCIs in Table 1 is two. However, this application is not limited thereto. For example, in another scenario, the maximum quantity of TCIs may be four or another value, and is not listed one by one in this application.

In some embodiments, the at least one message may explicitly indicate one or more TCIs used for each of the multiple channels. For example, the multiple channels may be represented as M channels, where M is a positive integer. In some other embodiments, the at least one message may indicate one or more TCIs. Further, in a process 224, the terminal device 202 may determine, based on the at least one message, one or more TCIs used for each channel. For example, the determining may be based on the at least one message and the preconfigured quantity of TCIs for each channel as described above. To simplify the illustration, the following uses two channels as an example for description.

It is assumed that the N1 TCIs are used for the first channel, and the N2 TCIs are used for the second channel. For ease of description, it is assumed that N1<N2. It may be understood that a case corresponding to N1=N2 or N1>N2 may be obtained similarly based on the following embodiments, and details are not described in this specification.

In some embodiments of this application, the at least one message may be implemented as single signaling, for example, includes a first message or a sixth message. In some other embodiments of this application, the at least one message may be implemented as multiple signaling, for example, includes a second message and a third message, includes a fourth message and a fifth message, or includes multiple sixth messages.

For example, in some embodiments of this application, the at least one message may include the first message, and the first message may separately indicate the N1 TCIs and the N2 TCIs.

It may be understood that the first message may be an RRC layer message, a MAC layer message, or a physical layer message. This is not limited in this application.

In an example, the first message is the RRC layer message. The N1 TCIs and the N2 TCIs may be indicated using one field (or referred to as a field) or multiple fields in the RRC layer message. Alternatively, the N1 TCIs and the N2 TCIs may be bound to parameters based on which different TRPs can be distinguished, so that the N1 TCIs and the N2 TCIs are implicitly indicated using the parameters that are in the RRC layer message and based on which the different TRPs can be distinguished. For example, the parameter may be an identifier of a CORESET pool, a channel identifier (for example, an ID), a channel sending sequence, or the like.

In an example, the first message is the MAC layer message, for example, a MAC-CE. In an example, the first message is the physical layer message, for example, DCI. For example, one field in the first message indicates both the N1 TCIs and the N2 TCIs. For example, one field in the first message indicates the N1 TCIs, and another field indicates the N2 TCIs.

For example, a first field of the first message may be predefined or configured to be used for the first channel, so that an identifier of a TCI in the first field represents the N1 TCIs used for the first channel. Similarly, a second field of the first message may be predefined or configured to be used for the second channel, so that an identifier of a TCI in the second field represents the N2 TCIs used for the second channel.

Optionally, the first message may explicitly indicate the N1 TCIs used for the first channel. For example, the first message includes a first correspondence between an identifier (such as a channel name) of the first channel and identifiers of the N1 TCIs (such as sequence numbers of the TCIs). The first message may explicitly indicate the N2 TCIs used for the second channel. For example, the first message includes a second correspondence between an identifier (such as a channel name) of the second channel and identifiers of the N2 TCIs (such as sequence numbers of the TCIs).

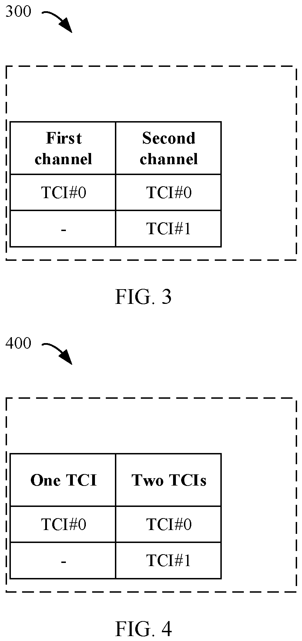

In an example, it is assumed that N1=1 and N2=2. FIG. 3 is a diagram of a first message 300. In 300, the first correspondence and the second correspondence are schematically represented in a form of a table, where TCI#0 is used for the first channel, and TCI#0 and TCI#1 are used for the second channel. For example, the first channel is a PDCCH, and the second channel is a PDSCH. Alternatively, there is another example, which is not listed herein.

Optionally, the first message may explicitly indicate the N1 TCIs used for the first channel. For example, the first message includes the identifiers of the N1 TCIs (such as the sequence numbers of the TCIs). Because a quantity of TCIs used for the first channel is preconfigured as N1, the terminal device 202 may determine, based on this, the N1 TCIs used for the first channel. Similarly, the first message may explicitly indicate the N2 TCIs used for the second channel. For example, the first message includes the identifiers of the N2 TCIs (such as the sequence numbers of the TCIs). Because a quantity of TCIs used for the second channel is preconfigured as N2, the terminal device 202 may determine, based on this, the N2 TCIs used for the second channel.

In an example, it is assumed that N1=1 and N2=2. FIG. 4 is a diagram of a first message 400. In 400, "one TCI: TCI#0" and "two TCIs: TCI#0 and TCI#1" are schematically represented in a form of a table. Because one TCI used for the first channel and two TCIs used for the second channel have been preconfigured, the terminal device 202 may determine, from 400 based on the configuration, that TCI#0 is used for the first channel, and TCI#0 and TCI#1 are used for the second channel. For example, the first channel is a PDCCH, and the second channel is a PDSCH. Alternatively, there is another example, which is not listed herein.

In this manner, the first message may simultaneously indicate one or more TCIs used for each of the multiple channels. In this way, an indication manner can be simplified, signaling overheads can be reduced, and a system delay can be reduced.

For example, in some embodiments of this application, the at least one message may include the second message and the third message, the second message indicates the N1 TCIs, and the third message indicates the N2 TCIs.

It may be understood that the second message may be an RRC layer message, a MAC layer message, or a physical layer message, the third message may be an RRC layer message, a MAC layer message, or a physical layer message, and the second message and the third message belong to a same type or different types. This is not limited in this application.

Optionally, the second message may indicate the N1 TCIs. For example, the second message includes identifiers of the N1 TCIs. It may be understood that the second message may explicitly or implicitly indicate a first correspondence between the first channel and the N1 TCIs. For details, refer to the foregoing similar descriptions with reference to the first message. The third message may indicate the N2 TCIs. For example, the third message includes identifiers of the N2 TCIs. It may be understood that the third message may explicitly or implicitly indicate a second correspondence between the second channel and the N2 TCIs. For details, refer to the foregoing similar descriptions with reference to the first message.

For example, a specific field of the second message may be predefined or configured to be used for the first channel, so that an identifier of a TCI in the specific field of the second message indicates the N1 TCIs used for the first channel. Similarly, a specific field of the third message may be predefined or configured to be used for the second channel, so that an identifier of a TCI in the specific field of the third message indicates the N2 TCIs used for the second channel.

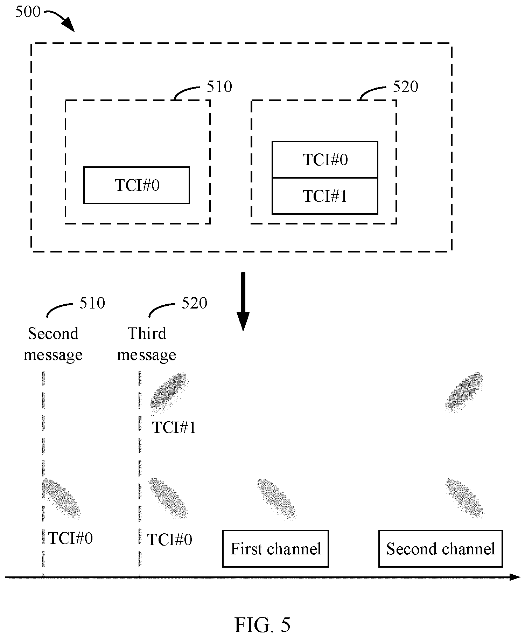

In an example, it is assumed that N1=1 and N2=2. FIG. 5 is a diagram of a combination 500 of a second message and a third message. 500 includes the second message 510 and the third message 520, where the second message indicates the N1 TCIs by using "TCI#0", and the third message indicates the N2 TCIs by using "TCI#0 and TCI#1". Because one TCI used for the first channel and two TCIs used for the second channel have been preconfigured, the terminal device 202 may determine, from 500 based on the configuration, that TCI#0 is used for the first channel, and TCI#0 and TCI#1 are used for the second channel. For example, the first channel is a PDCCH, and the second channel is a PDSCH. Alternatively, there is another example, which is not listed herein.

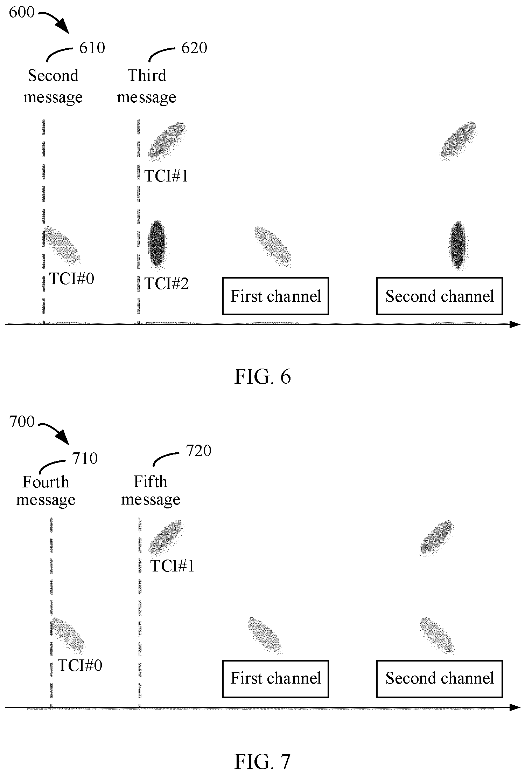

In another example, it is assumed that N1=1 and N2=2. FIG. 6 is a diagram of a combination 600 of a second message and a third message. 600 includes the second message 610 and the third message 620, where the second message indicates the N1 TCIs by using "TCI#0", and the third message indicates the N2 TCIs by using "TCI#1 and TCI#2". Because one TCI used for the first channel and two TCIs used for the second channel have been preconfigured, the terminal device 202 may determine, from 600 based on the configuration, that TCI#0 is used for the first channel, and TCI#1 and TCI#2 are used for the second channel. For example, the first channel is a PDCCH, and the second channel is a PDSCH. Alternatively, there is another example, which is not listed herein.

In this manner, the second message and the third message may jointly indicate one or more TCIs used for each of the multiple channels. In this way, a more flexible indication manner can be implemented, and flexible scheduling of a TCI indication by the network device is facilitated.

For example, in some embodiments of this application, the at least one message may include the second message and the third message, the second message indicates the N1 TCIs, and the third message indicates the N1 TCIs.

It may be understood that the second message may be an RRC layer message, a MAC layer message, or a physical layer message, the third message may be an RRC layer message, a MAC layer message, or a physical layer message, and the second message and the third message belong to a same type or different types. This is not limited in this application. Optionally, the second message/the third message may indicate the N1 TCIs. For example, the second message/the third message includes identifiers of the N1 TCIs.

In an example, it is assumed that N1=1 and N2=2. To be specific, it is assumed that N1=1 TCI is used for the first channel, and it is assumed that N2=2 TCIs are used for the second channel. Optionally, the terminal device may use the N1 TCI (for example, TCI#0) indicated by the second message or the third message for the first channel. Optionally, the terminal device may use the N1 TCI (for example, TCI#0) indicated by the second message and the N1 TCI (for example, TCI#0) indicated by the third message for two transmissions (or referred to as repetitions) of the second channel.

In this manner, the second message and the third message may jointly indicate at least one TCI used for each of the multiple channels. In this way, a more flexible indication manner can be implemented, and flexible scheduling of a TCI indication by the network device is facilitated.

For example, in some embodiments of this application, the at least one message may include the fourth message and the fifth message, the fourth message indicates the N1 TCIs, and the fifth message indicates (N2-N1) TCIs. Further, the terminal device 202 may determine, based on the fourth message, the N1 TCIs used for the first channel, and may determine, based on a combination of the fourth message and the fifth message, the N2 TCIs used for the second channel.

It may be understood that the fourth message may be an RRC layer message, a MAC layer message, or a physical layer message, the fifth message may be an RRC layer message, a MAC layer message, or a physical layer message, and the fourth message and the fifth message belong to a same type or different types. This is not limited in this application.

Optionally, the fourth message may indicate the N1 TCIs. For example, the fourth message includes identifiers of the N1 TCIs. The fifth message may indicate the (N2-N1) TCIs. For example, the fifth message includes identifiers of the (N2-N1) TCIs.

In an example, it is assumed that N1=1 and N2=2. FIG. 7 is a diagram of a combination 700 of a fourth message and a fifth message. 700 includes the fourth message 710 and the fifth message 720, where the fourth message 710 indicates the N1 TCIs by using "TCI#0", and the fifth message 720 indicates the (N2-N1) TCIs by using "TCI#1". Because one TCI used for the first channel and two TCIs used for the second channel have been preconfigured, based on the configuration, the terminal device 202 may determine, from 710, that TCI#0 is used for the first channel, and determine, from the combination of 710 and 720, that TCI#0 and TCI#1 are used for the second channel. For example, the first channel is a PDCCH, and the second channel is a PDSCH. Alternatively, there is another example, which is not listed herein.

In this manner, the fourth message and the fifth message may jointly indicate one or more TCIs used for each of the multiple channels. In this way, a more flexible indication manner can be implemented, and flexible scheduling of a TCI indication by the network device is facilitated.

For example, in some embodiments of this application, the at least one message may include at least one sixth message, and the at least one sixth message indicates at least a part of TCIs of the multiple TCIs. In some examples, at least the part of TCIs may be the multiple TCIs. In some other examples, at least the part of TCIs may be a part of the multiple TCIs. That is, a quantity of TCIs in at least the part of TCIs may be equal to or less than a quantity of the multiple TCIs.

It may be assumed that at least the part of TCIs may be N TCIs. In an example, a set including the N1 TCIs used for the first channel and the N2 TCIs used for the second channel includes the N TCIs. For example, the terminal device 202 may select, from the N TCIs based on a preset criterion, the N1 TCIs used for the first channel, and/or select, from the N TCIs, the N2 TCIs used for the second channel.

Optionally, the at least one sixth message includes one sixth message, and the sixth message includes the N TCIs. Optionally, the at least one sixth message may include N sixth messages, each sixth message includes one TCI, and different sixth messages include different TCIs. Optionally, the at least one sixth message may include N' sixth messages, where 1<N'<N, and each sixth message includes one or more of the N TCIs.

It may be understood that each sixth message may be an RRC layer message, a MAC layer message, or a physical layer message, and different sixth messages may belong to a same type or different types. This is not limited in this application.

For example, the preset criterion may be predefined or preconfigured, and the terminal device 202 may select the N1 TCIs and the N2 TCIs based on the predefined or preconfigured preset criterion.

For example, the preset criterion may be indicated by the network device 201. For example, the network device 201 may send an indication of the preset criterion to the terminal device 202 by using a seventh message or one sixth message in the at least one sixth message. For example, the seventh message or the sixth message may include the preset criterion, or may include an identifier (for example, an ID, an index, or a codepoint) of the preset criterion. That is, the terminal device 202 may receive the indication of the preset criterion from the network device 201, to select the N1 TCIs and the N2 TCIs based on the received preset criterion.

Optionally, the network device 201 may determine, based on capability information of the terminal device 202, a preset criterion to be used, and send the preset criterion to the terminal device 202. In this case, it may be understood that the capability information of the terminal device 202 may indicate that the terminal device 202 supports a method of the preset criterion, and the capability information may alternatively indicate a preset criterion that can be supported by the terminal device 202.

For example, the preset criterion may include one or more of the following: (1) respective identifiers of at least the part of TCIs, (2) an order of at least the part of TCIs, (3) respective activation time of at least the part of TCIs, (4) an order of activation time of at least the part of TCIs, (5) respective effective time of at least the part of TCIs, or (6) an order of effective time of at least the part of TCIs.

For example, the identifier of the TCI is, for example, an ID of the TCI. Optionally, first N1 TCIs may be selected in descending (or ascending) order of IDs of the N TCIs to be used for the first channel, and first N2 TCIs may be selected in descending (or ascending) order of the IDs of the N TCIs to be used for the second channel.

For example, the order of the TCIs may be an order in the at least one sixth message, for example, an order of receiving the TCIs by the terminal device 202 as determined based on a timestamp. Optionally, the N1 TCIs may be selected in a positive order or a reverse order of the N TCIs to be used for the first channel, and the N2 TCIs may be selected in the positive order or the reverse order of the N TCIs to be used for the second channel.

For example, the order of the TCIs may be an order of TCIs corresponding to codepoints. It is assumed that a specific codepoint may be mapped to x TCIs. In this case, the N1 TCIs used for the first channel and the N2 TCIs used for the second channel may be determined based on the order of the x TCIs. In an example, N1 TCIs starting from a j1 ^{th} TCI of the x TCIs may be selected as the N1 TCIs used for the first channel, and N2 TCIs starting from a j2^{th} TCI of the x TCIs may be selected as the N2 TCIs used for the second channel, where j 1 and j2 may be equal or may not be equal. In an example, j 1=j2=1.

For example, the order of the TCIs may be an order of TCIs in a TCI set configured using RRC. It is assumed that the TCI set configured using the RRC includes x TCIs. In this case, the N1 TCIs used for the first channel and the N2 TCIs used for the second channel may be determined based on the order of the x TCIs. In an example, N1 TCIs starting from a j1^{th} TCI of the x TCIs may be selected as the N1 TCIs used for the first channel, and N2 TCIs starting from a j2^{th} TCI of the x TCIs may be selected as the N2 TCIs used for the second channel, where j 1 and j2 may be equal or may not be equal. In an example, j1=j2=1.

For example, the activation time of the TCIs may be determined based on a MAC-CE. For example, the effective time of the TCIs may be determined based on a timestamp of the MAC-CE including the TCIs. In this way, the order of the activation time of the N TCIs can be determined. Optionally, the N1 TCIs may be selected in a positive order or a reverse order of the activation time of the N TCIs to be used for the first channel, and the N2 TCIs may be selected in the positive order or the reverse order of the activation time of the N TCIs to be used for the second channel.

For example, the effective time (or indication time) of the TCI may be determined based on a corresponding codepoint (codepoint) in DCI. It may be understood that there is a mapping relationship between a codepoint and a TCI. If a codepoint included in the DCI can be mapped to a TCI, it is considered that the TCI takes effect. Optionally, the N1 TCIs may be selected in a positive order or a reverse order of the effective time of the N TCIs to be used for the first channel, and the N2 TCIs may be selected in the positive order or the reverse order of the effective time of the N TCIs to be used for the second channel.

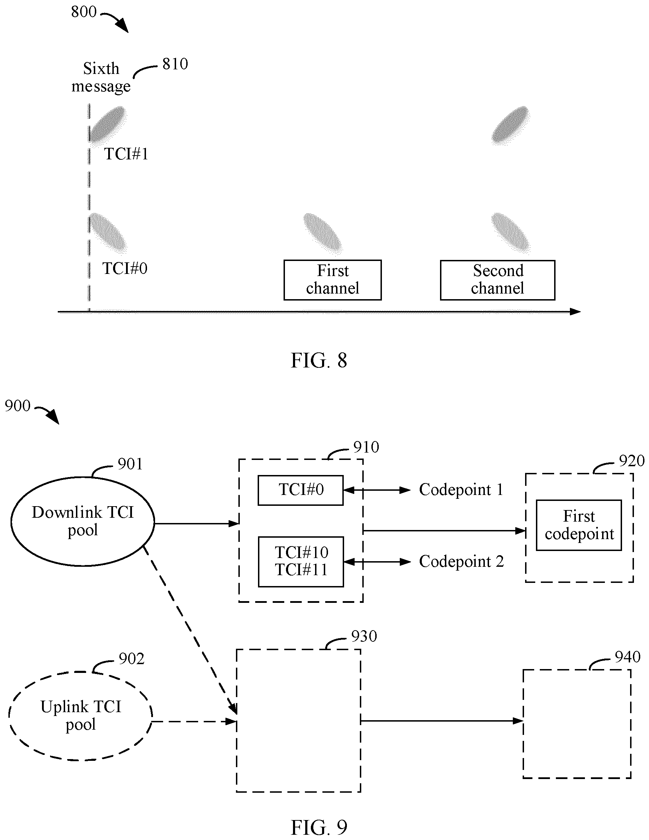

In an example, it is assumed that N1=1 and N2=2. FIG. 8 is a diagram of a sixth message 800. The sixth message 810 indicates two TCIs by using "TCI#0" and "TCI#1". Optionally, the terminal device 202 may determine, based on sizes of identifiers, that TCI#0 with a smallest identifier is the N1 TCIs used for the first channel, and determine that TCI#0 and TCI#1 with smallest identifiers are the N2 TCIs used for the second channel. For example, the first channel is a PDCCH, and the second channel is a PDSCH. Alternatively, there is another example, which is not listed herein.

In an example, it is assumed that N1=1 and N2=2, and a combination of two sixth messages may be used for indication. For example, one sixth message indicates one TCI by using "TCI#0", and the other sixth message indicates another TCI by using "TCI#1". Optionally, the terminal device 202 may determine, based on sizes of identifiers, that TCI#0 with a smallest identifier is the N1 TCIs used for the first channel, and determine that TCI#0 and TCI#1 with smallest identifiers are the N2 TCIs used for the second channel. For example, the first channel is a PDCCH, and the second channel is a PDSCH. Alternatively, there is another example, which is not listed herein. Optionally, the two sixth messages may be of a same type, for example, both are MAC-CEs, or both are DCI. Optionally, the two sixth messages may be of different types. For example, one sixth message is a MAC-CE, and the other sixth message is DCI.

In this manner, at least the part of TCIs may be indicated using the sixth message, so that the terminal device can select, based on the preset criterion, one or more TCIs used for each of the multiple channels. In this way, a more flexible indication manner in a hybrid scenario can be implemented, and this solution is simple and easy to implement.

It may be assumed that at least the part of TCIs may be the N TCIs. In an example, a set including the N TCIs may include the N1 TCIs used for the first channel and the N2 TCIs used for the second channel. For example, a quantity of TCIs in a set including the N1 TCIs and the N2 TCIs may be equal to or less than N. This is not limited in this application. For example, based on an indication from the network device, the terminal device 202 may select, from the N TCIs, the N1 TCIs used for the first channel, and select, from the N TCIs, the N2 TCIs used for the second channel.

For example, the at least one sixth message may include a mapping relationship between a TCI and a codepoint. The terminal device 202 may further receive an eighth message from the network device 201, where the eighth message includes a codepoint. In this case, the terminal device 202 may determine, based on the mapping relationship, at least one TCI corresponding to the codepoint in the eighth message. For example, the at least one sixth message is a MAC-CE message, and the eighth message is a DCI message.

Optionally, the at least one sixth message includes the MAC-CE message. For example, the MAC-CE message may include the mapping relationship between the TCI and the codepoint. In the mapping relationship, one codepoint may be mapped to at least one TCI. For example, the indication from the network device may be a codepoint, and the codepoint may be carried in DCI. In other words, the terminal device 202 may receive the DCI from the network device 201, and the DCI indicates the codepoint. Therefore, the terminal device 202 may determine, based on a mapping relationship, at least one TCI to which the codepoint in the DCI is mapped.

In an example, it is assumed that N1=1 and N2=2. FIG. 9 is a diagram of a combination 900 of a MAC-CE and DCI. 900 includes the MAC-CE 910 and the DCI 920. A mapping relationship in the MAC-CE 910 includes, for example, a mapping between TCI#0 and a codepoint 1 and a mapping between TCI#10 and TCI#11 and a codepoint 2, and the DCI 920 may include, for example, a first codepoint. It may be understood that, if the first codepoint corresponds to the first channel, and the first codepoint is the codepoint 1, it is determined that TCI#0 is used for the first channel. It may be understood that, if the first code corresponds to the second channel, and the first codepoint is the codepoint 2, it is determined that TCI#10 and TCI#11 are used for the second channel. For example, the first channel is a PDCCH, and the second channel is a PDSCH. Alternatively, there is another example, which is not listed herein.

Optionally, in the example of FIG. 9, a MAC-CE 930 is also shown, and it may be assumed that the MAC-CE 910 is used for a downlink and the MAC-CE 930 is used for an uplink. In a unified TCI framework, the MAC-CE 910 and the MAC-CE 930 may be determined based on a pre-configured TCI pool (which is, for example, configured using RRC). For example, a separate TCI pool includes a downlink TCI pool 901 and an uplink TCI pool 902, so that the MAC-CE 910 can be determined based on the downlink TCI pool 901, and the MAC-CE 930 can be determined based on the uplink TCI pool 902. For example, a joint TCI pool may reuse the downlink TCI pool 901 of the separate TCI pool, so that the MAC-CE 910 can be determined based on the downlink TCI pool 901, and the MAC-CE 930 can also be determined based on the downlink TCI pool 901.

Similarly, in the example of FIG. 9, DCI 940 is also shown, and it may be assumed that the DCI 920 is for downlink transmission, while the DCI 940 is for uplink transmission. In this case, the terminal device 202 may determine, based on a codepoint in the DCI 920, at least one TCI used for a downlink channel (such as a PDCCH or a PDSCH), and may determine, based on a codepoint in the DCI 940, at least one TCI used for an uplink channel (such as a PUCCH or a PUSCH). For details, refer to the foregoing descriptions of determining the at least one TCI based on the DCI 920. Details are not described herein again.

It should be noted that, although in the foregoing example, there is one TCI used for the PDCCH, this application is not limited thereto. For example, the second channel may be a PDCCH, and there may be at least two TCIs used for the PDCCH. Similarly, although in the foregoing example, there are two TCIs used for the PDSCH, this application is not limited thereto. For example, the first channel may be a PDSCH, and there may be at least one TCI, for example, one TCI used for the PDSCH.

For example, the at least one TCI used for the first channel may be the same as the at least two TCIs used for the second channel. Optionally, the at least one TCI used for the first channel and the at least two TCIs used for the second channel may be simultaneously indicated using a common indication.

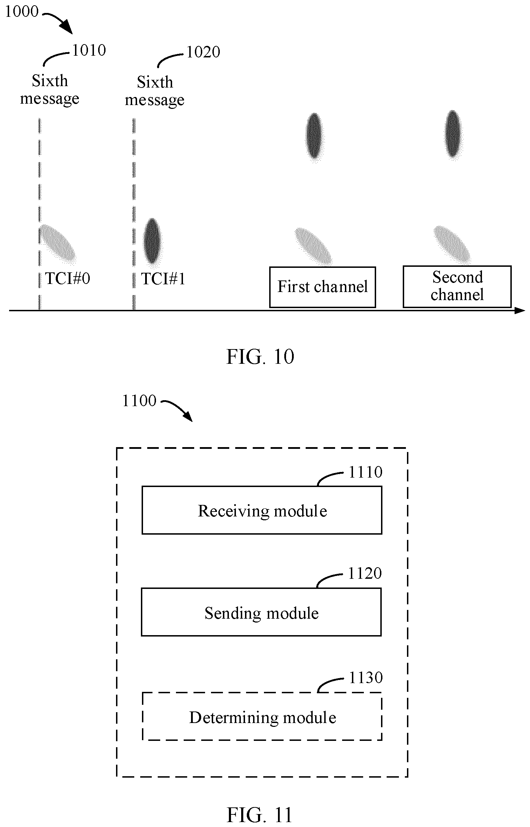

In an example, it is assumed that N1=2 and N2=2. FIG. 10 is a diagram of a combination 1000 of two sixth messages. A sixth message 1010 indicates one TCI by using "TCI#0", and a sixth message 1020 indicates another TCI by using "TCI#1". Because two TCIs used for the first channel and two TCIs used for the second channel have been preconfigured, the terminal device 202 may determine, from the combination 1000 of the sixth message 1010 and the sixth message 1020 based on the configuration, that TCI#0 and TCI#1 are used for the first channel, and TCI#0 and TCI#1 are used for the second channel. For example, the first channel is a PDCCH, and the second channel is a PDSCH. Alternatively, there is another example, which is not listed herein. Optionally, the two sixth messages may be of a same type, for example, both are MAC-CEs, or both are DCI. Optionally, the two sixth messages may be of different types. For example, the sixth message 1010 is a MAC-CE, and the sixth message 1020 is DCI. This is not limited in this application.

It may be understood that, although the foregoing embodiments are described using the first channel and the second channel as examples, embodiments of this application are not limited thereto. For example, embodiments of this application are applicable to more channels, for example, M channels, where M is a positive integer. In addition, it may be understood that, for each of the M channels, at least one TCI used for the channel may be similarly determined.

In a process 230, the terminal device 202 receives/sends the first channel based on the at least one TCI. Specifically, the terminal device 202 may send the first channel transmission by using the at least one TCI. The terminal device 202 may receive the first channel transmission by using the at least one TCI.

For example, in some embodiments of this application, the terminal device 202 may receive/send the first channel based on the at least one TCI. It should be noted that in embodiments of this application, "receive/send" includes receiving, sending, simultaneous sending, and simultaneous receiving. The "channel" may be understood as a channel/signal, where the channel may be any one of a PDCCH, a PDSCH, a PUCCH, or a PUSCH, and the signal may be a reference signal, for example, an SRS, a TRS, or a CSI-RS. Receiving a channel may be understood as receiving information on the channel, or may be understood as receiving information transmitted through the channel, or may be understood as receiving information by using a resource of the channel, or the like. Similarly, sending a channel may be understood as transmitting information on the channel, or may be understood as transmitting information through the channel, or may be understood as transmitting information by using a resource of the channel, or the like. It should be noted that similar descriptions in the following should be explained as similar meanings, and details are not described in this application.

Optionally or additionally, the terminal device 202 may receive/send the second channel based on the at least two TCIs. Specifically, the terminal device 202 may send the second channel transmission by using at least two TCIs. The terminal device 202 may receive the second channel transmission by using the at least two TCIs. It may be understood that receiving/sending the second channel transmission by using the at least two TCIs may be understood as using the at least two TCIs for different repetitions of the second channel transmission, or using the at least two TCIs for different TRPs of the second channel transmission.

Optionally or additionally, the terminal device 202 may receive/send a third channel based on at least one TCI. Optionally or additionally, the terminal device 202 may receive/send a fourth channel based on at least one TCI.

In this manner, the terminal device 202 may determine, based on the at least one message, at least one TCI used for each channel. In this way, extension of the unified TCI framework can be implemented, multiple TCIs in a multi-MTP scenario can be indicated in a unified manner, and flexibility of transmission of each channel can be improved.

The foregoing describes the main embodiments of this application with reference to FIG. 2 to FIG. 10. However, it should be noted that this application is not limited thereto. For example, in some other embodiments, the process 220 in FIG. 2 is not mandatory, that is, the process 220 may be ignored.

For example, a communication method in embodiments of this application may include: A terminal device 202 receives multiple TCIs from a network device 201; determines at least one TCI and/or at least two TCIs from the multiple TCIs based on a preset criterion, where the at least one TCI is used for transmission of a first channel, and the at least two TCIs are used for transmission of a second channel; receives and/or sends the first channel based on the at least one TCI; and/or receives and/or sends the second channel based on the at least two TCIs.

For example, the network device 201 may configure the multiple TCIs for the terminal device 202. The network device 201 may determine or generate the multiple TCIs in advance, and send the multiple TCIs to the terminal device 202 in a form of signaling. For example, signaling that carries the multiple TCIs may be higher layer signaling, for example, RRC signaling.

It is assumed that the multiple TCIs are N0 TCIs, where N0 is a positive integer. In this case, based on the preset criterion, the terminal device 202 may select, from the N0 TCIs, N1 TCIs used for the first channel, and/or select, from the N0 TCIs, N2 TCIs used for the second channel.

For example, the preset criterion may be predefined or preconfigured, and the terminal device 202 may select the N1 TCIs and the N2 TCIs based on the predefined or preconfigured preset criterion. For example, the preset criterion may be indicated by the network device 201. For example, the network device 201 may send the preset criterion to the terminal device 202 by using another message. Optionally, the network device 201 may determine, based on capability information of the terminal device 202, a preset criterion to be used, and send the preset criterion to the terminal device 202. In this case, it may be understood that the capability information of the terminal device 202 may indicate that the terminal device 202 supports a method of the preset criterion, and the capability information may alternatively indicate a preset criterion that can be supported by the terminal device 202.

For example, the preset criterion may include one or more of the following: (1) respective identifiers of the multiple TCIs, (2) an order of the multiple TCIs, (3) respective activation time of the multiple TCIs, (4) an order of activation time of the multiple TCIs, (5) respective effective time of the multiple TCIs, and (6) an order of effective time of the multiple TCIs.

For example, for a process in which the terminal device 202 selects the at least one TCI and/or the at least two TCIs from the multiple TCIs based on the preset criterion, refer to the foregoing embodiments. The foregoing process in which the terminal device 202 selects, based on the preset criterion, the at least one TCI and/or the at least two TCIs from at least the part of TCIs indicated by the sixth message is not repeated herein for brevity.

It should be understood that, in embodiments of this application, terms "first", "second", "third", and the like are merely intended to indicate that multiple objects may be different, but two objects may be the same. The terms "first", "second", "third", and the like should not be construed as any limitation on embodiments of this application.

It should be further understood that division into the manners, cases, categories, and embodiments in embodiments of this application is merely for ease of description, and should not constitute a particular limitation. Features in the manners, categories, cases, and embodiments may be combined with each other provided that the features are logical.

It should be further understood that the foregoing content is merely intended to help a person skilled in the art better understand embodiments of this application, instead of limiting the scope of embodiments of this application. A person skilled in the art may make various modifications, variations, combinations, or the like based on the foregoing content. A solution obtained through such a modification, variation, or combination also falls within the scope of embodiments of this application.

It should be further understood that descriptions of the foregoing content focus on differences between embodiments. For same or similar parts, refer to each other. For brevity, details are not described herein again.

In some other embodiments of this application, a terminal device uses a deployment of multiple antenna panels. In this case, how to ensure that radiation intensity of the terminal device is safe, and/or how to reduce impact of an antenna panel switching standard on communication needs to be considered.

When a terminal device such as a mobile phone is used, a transmit antenna is quite close to a brain or another part of a human body. To avoid emission of excessively high electromagnetic energy radiation, there are usually some safety standards, to ensure that there is no excessive electromagnetic energy radiation, thereby ensuring safety of people when the mobile phone is used. For example, maximum permissible radiation (amount) (Maximum Permissible Exposure, MPE) or a specific absorption rate (Specific Absorption Rate, SAR) may be used to measure whether impact of radiation of a terminal device (such as a mobile phone) on a human body meets a standard.

In some communication systems, for example, a 5th generation (5th Generation, 5G) communication system or a new radio (New Radio, NR) access system, to achieve wide area coverage, both a network device and a terminal device use a deployment of multiple antenna panels (antenna panels), and a beam used for communication between the network device and the terminal device is sent or received through the antenna panels. Especially, for the terminal device, to achieve the coverage and in a case of limited space and cost saving, an antenna panel deployment has more important impact on performance.

In this case, in a scenario in which the terminal device uses a deployment of multiple antenna panels, it is necessary to ensure system performance and that radiation intensity of the terminal device meets a safety standard.

In some communication systems, for example, a new radio (New Radio, NR) access system of a 5th generation (5th Generation, 5G) communication system, to resist a path loss in a high frequency scenario, a transmit end and a receive end may separately obtain a gain through beamforming (beamforming, BF). The transmit end and the receive end may send and receive a signal based on a predetermined beam pairing relationship.

Because the beam has specific spatial directivity, the multiple antenna panels (antenna panels) may be configured for the terminal device, to achieve the wide area coverage. The beam may be received or sent through the antenna panels. When the terminal device needs to perform beam switching, the terminal device may first need to perform panel switching, and then switch to a corresponding beam to send and receive a signal. However, panel switching by the terminal device may take some time. If the terminal device performs panel switching after receiving scheduling signaling, a scheduled resource may arrive before the terminal device performs panel switching. Consequently, a signal carried on the resource may not be successfully transmitted.

For ease of understanding embodiments of this application, the following first briefly describes some terms and background that may be involved.

When a terminal device is used, a transmit antenna is quite close to a brain or another part of a human body. To avoid emission of excessively high electromagnetic energy radiation, some standards are usually used for limitation, to ensure that there is no excessive electromagnetic energy radiation, thereby ensuring safety of people when the terminal device is used. For example, MPE, a maximum permissible radio frequency exposure value (maximum permissible RF exposure regulations), a SAR, radio frequency emission (RF emission), or the like may indicate a limit that meets a requirement on radiation to the human body. To simplify the illustration, the following uses the MPE as an example.

Usually, an indicator of an "MPE limit" may indicate an amount of radiation on an average area at a specific distance within average time. For details about a limit requirement, refer to a limit requirement provided by the International Commission on Non-Ionizing Radiation Protection (international commission on non-ionizing radiation protection, ICNIRP) and the Federal communications Commission (federal communications commission, FCC). For example, Table 2 and Table 3 show two possible limit manners.

Table 2 shows a simple limit manner, that is, factors such as a reference frequency (f_{ref}), a power density (power density, PD), a statistical area, and statistical duration. In practice, factors such as an antenna array and a distance to a human body are usually considered in the MPE limit, as shown in Table 3. In Table 3, a frequency f=10 GHz is used as an example. When a 2x2 antenna array is deployed and an array area (array area) is 9 cm², and when a distance between a terminal device (for example, a portable application (portable application)) and a human body is d=0.5 cm, an ICNIRP limit is met, a maximum transmitted power (maximum transmitted power) is 13 dBm, and a maximum equivalent isotropically radiated power (equivalent isotropically radiated power, EIRP) (or effective isotropically radiated power) (maximum EIRP) is 24 dBm. In this example, time averaging is not considered, and it may be considered that the terminal device continuously performs sending.

**Table 2**

| | **FCC** | **ICNIRP** |
|---|---|---|
| Reference frequency f_{ref} (GHz) | 6 | 6 |
| Power density (W/m²) f>f_{ref} | 10 | 55*f--0.177 |
| Statistical area | 4 cm² | 4 cm² (~30 GHz) |
| | | 1 cm² (30 GHz~) |
| Statistical duration | 8s (16 to 24 GHz) | 6 mins (~300 GHz) |
| | 4s (24 to 42 GHz) | |
| | 2s (42 GHz~) | |

**Table 3**

| | f (GHz) | Array area (cm²) 2×2 to 10×10 | Maximum transmitted power (dBm) | | Maximum EIRP (dBm) | |
|---|---|---|---|---|---|---|
| | | | **ICNIRP** | **FCC** | **ICNIRP** | **FCC** |
| Portable application (d=0.5 cm) | **10** | **9.0** to 230 | **13** to 25 | 8 to 19 | **24** to 50 | 19 to 44 |
| | 20 | 2.3 to 56 | 11 to 19 | 6 to 14 | 23 to 44 | 18 to 39 |
| | 30 | 1.0 to 25 | 11 to 16 | 6 to 11 | 22 to 41 | 17 to 36 |
| | 40 | 0.56 to 14 | 6 to 12 | 6 to 10 | 17 to 37 | 17 to 35 |
| | 50 | 0.36 to 9.0 | 5 to 11 | 6 to 9 | 17 to 36 | 17 to 34 |

The MPE limit takes into account the amount of radiation within the average time. In this case, an amount of radiation may be increased when the radiation is not continuous. Table 3 is used as an example. Provided limits on a transmitted power and an EIRP are both indicators in continuous sending, that is, indicators corresponding to an uplink transmission duty ratio (duty cycle, or duty ratio) of 100%. If the uplink transmission duty ratio is decreased in a period of time, the corresponding transmitted power or EIRP may be increased. For example, if the uplink transmission duty ratio is decreased to 25% within a period of time (for example, in a typical TDD configuration DDDSU), a corresponding transmitted power or EIRP may be increased by 6 dB.

It can be learned from the foregoing analysis that many factors are considered in the MPE limit, such as the distance to the human body, the transmitted power, the EIRP, and the uplink transmission duty ratio (or a transmission time ratio). These factors may be determined by the terminal device. For example, the distance to the human body may be obtained through a sensor. For example, the transmitted power or the EIRP may be implemented through power reduction. For example, the uplink transmission duty ratio may be properly configured by the network device by reporting a capability to the network device. However, implementation through the pure terminal device may bring some problems and risks to a system. For example, the power reduction may cause uplink coverage shrinkage and may also cause a risk of a radio link failure (radio link failure, RLF) of the system. For example, an excessively low uplink transmission duty ratio may cause an excessively low uplink throughput. In addition, the sensor for detecting the distance to the human body also faces problems of accuracy and precision, and so on.

The foregoing briefly describes related information of the MPE limit, and the following describes related content of using a beam for communication.

In some communication systems, for example, NR, a high frequency band (usually considered to be above 6 GHz), for example, a 28 GHz, 39 GHz, or 60 GHz frequency band is newly added. A higher bandwidth and a higher transmission rate can be achieved by introducing the high frequency band. However, after the high frequency band is introduced, because of a high frequency, a signal may be severely attenuated in a spatial propagation process. For example, a beamforming technology may be used to obtain a good directional gain, to increase directional power in a transmit direction, improve a signal to interference plus noise ratio (Signal to Interference plus Noise Ratio, SINR) at a receive end, and further improve system performance.

In an NR research process, a hybrid beamforming (hybrid beamforming, HBF) technology including digital beamforming and analog beamforming may be used in consideration of costs and performance. In an implementation process of the beamforming technology, a core component includes an antenna panel, and a beam is sent or received through the antenna panel. During deployment and implementation of 5G NR, because a directional beam is used, to achieve wide area coverage, both the network device and the terminal device use a deployment of multiple antenna panels. Especially, for the terminal device, to achieve the coverage and in a case of limited space and cost saving, an antenna panel deployment has more important impact on performance.

After both the network device and the terminal device use the hybrid beamforming technology, some discussions are brought.

### About transmit and receive beam management

For the transmit and receive beam management, after multiple discussions, content of the beam management is standardized in 3GPP Rel-15, that is, a first version of 5G NR. A framework of the beam management is standardized, including beam training, beam measurement and reporting, indication for a beam of each signal or channel, and the like. The following separately describes indication for beams of uplink and downlink signals or channels.

For example, for indication for a PDCCH beam, a beam resource pool may be configured using higher layer RRC signaling, and one of beams is activated using MAC-CE signaling, to indicate the PDCCH beam. For example, for indication for a PDSCH beam, a beam resource pool may be configured using higher layer RRC signaling, a beam subset including multiple beams is activated using MAC-CE signaling, and one beam of the beam subset is triggered using DCI, to indicate the PDSCH beam. For example, beams of periodic and aperiodic CSI-RSs may be indicated using RRC signaling. For example, a beam of a semi-persistent CSI-RS may be indicated using a MAC-CE. For example, for indication for a PUCCH beam, a beam resource pool may be configured using higher layer RRC signaling, and one of beams is activated using MAC-CE signaling, to indicate the PUCCH beam. For example, for indication of a PUSCH beam, the PUSCH beam may be indicated using an SRS beam indicated by an SRI associated with the PUSCH beam. For example, for indication of beams of a periodic SRS (periodic SRS, P-SRS) and an aperiodic SRS (aperiodic SRS, AP-SRS), the beams of the periodic SRS and the aperiodic SRS may be indicated using RRC signaling. For example, for a semi-persistent SRS (semi-persistent SRS, SP-SRS), RRC signaling may be used for indication or MAC-CE signaling may be used for indication.

It should be understood that related content about the transmit and receive beam management is merely for ease of understanding, and does not limit the scope of the protection of embodiments of this application. It should be further understood that, in the following embodiments, unless otherwise explicitly described, a beam usually represents a transmit beam.

### About antenna panel

In a process of indication for a beam of each signal or channel, beam (or beam pair) switching is a core process, and not only beam switching of the network device is involved, but also beam switching of the terminal device is involved. In the 3GPP Rel-15 version, an antenna panel is not explicitly defined, and an antenna panel of the network device or an antenna panel of the terminal device is transparent. The "transparent" may be understood as that an antenna panel state of the network device is invisible to the terminal device, and an antenna panel state of the terminal device is also invisible to the network device. An antenna panel state depends on implementation of each of the devices. Therefore, how a beam or a resource (a signal, a channel, or the like) is associated with an antenna panel also depends on implementation of each of the devices. When the network device notifies the terminal device to perform beam switching, because the antenna panel is transparent, the network device cannot determine whether the terminal device performs antenna panel switching in a beam switching process. The antenna panel switching includes two actions: antenna panel activation and antenna panel switching. In addition, antenna panel switching by the terminal device or the network device takes some time. A RAN4 proposal has been discussed and agreed. Usually, antenna panel switching takes about 2 to 3 ms (including antenna panel activation and antenna panel switching). In most scenarios of a current protocol, time for antenna panel switching is not reserved. Therefore, when beam switching occurs and the antenna panel switching is required, a main control node of a system is usually used to ensure that sufficient time is reserved for completing the antenna panel switching by the network device or the terminal device.

An antenna panel is referred to as a panel (panel) for short. Each antenna panel may be configured with one or more receive beams and one or more transmit beams. Therefore, the antenna panel may also be understood as a beam group. A communication device, for example, a terminal device or a network device, may receive a signal by using a receive beam on an antenna panel, or may transmit a signal by using a transmit beam on an antenna panel.

The antenna panel is a logical entity, and how a physical antenna is mapped to a logical entity is determined based on product implementation. An identifier (identifier, ID) of an antenna panel may be defined. In this way, at least a transmitting antenna panel of the terminal device is visible to the network device. Therefore, the network device may indicate or obtain an antenna panel state of the terminal device based on an ID of the antenna panel.

Alternatively, an antenna panel may be implicitly identified using a signal or a signal set. For example, some transmission attributes of the signal and the signal set may be constrained to indicate an attribute of the antenna panel. For example, in a Rel-15 protocol, a behavior of an SRS resource set (SRS resource set) is constrained to be "SRS resources belonging to a same SRS resource set cannot be simultaneously sent, and SRS resources belonging to different SRS resource sets can be simultaneously sent", to reflect that beams on a same antenna panel cannot be simultaneously sent, and beams on different antenna panels can be simultaneously sent.

Alternatively, an antenna panel may be implicitly identified in a manner in which the terminal device reports a capability value set of the terminal device. For example, in Rel-17, the terminal device may report a capability value set (capability value set). The set includes at least one of the following: a quantity of SRS antenna ports, a coherence type, a maximum quantity of streams (layers), and the like. Different capability value sets may identify different antenna panels. During measurement reporting, the terminal device may further report a binding relationship between the capability value set and a measurement reference signal (or the like), where the measurement reference signal may include at least one of the following: a CSI-RS, an SRS, a synchronization signal block (Synchronization Signal Block, SSB), or the like. Therefore, the terminal device may notify the network device of a binding relationship between an antenna panel and a reference signal. For example, when reporting a beam measurement report, the terminal device may send a capability value set 1 (capability value set 1) and an SSB resource indicator (Resource Indicator, RI) 1 or a CSI-RS RI (CRI) 1 and a layer 1 reference signal received power (Layer 1 Reference Signal Received Power, L1-RSRP) and/or a value of an L1-SINR to the network device. The network device receives the beam measurement report, to learn of a measured value of an SSB or an L1-RSRP of a CSI-RS or an L1-SINR of a panel 1 of the terminal device. Then, the network device may perform panel-based sending or receiving based on the measured value. It may be understood that the binding relationship is determined by the terminal device, and the binding relationship may also be referred to as a mapping relationship.

In addition, the beam measurement report may also implicitly indicate an active state of a related antenna panel. For example, in the foregoing example, it is assumed that the terminal device activates the panel 1. In this case, the network device may determine, based on the beam measurement report, that the panel 1 of the terminal device is in an active state. Effective time of the activation may be a period of time, and a start moment of the effective time may be X ms after reporting of an acknowledgment report. Based on an active state of a panel of the terminal device, the network device may perform fast scheduling, sending, or receiving based on the panel.

In addition, an antenna panel may further correspond to an SRS resource set (resource set). For example, an antenna panel may be indicated using an SRS resource set ID. Alternatively, an ID of an antenna panel may be directly associated with a resource of a reference signal or a resource set of a reference signal. Alternatively, an ID of an antenna panel may be allocated using a resource of a target reference signal or a resource set of a reference signal. Alternatively, an ID of an antenna panel may be configured in spatial relationship (spatial relation) information.

In addition, for receiving/sending of a single antenna panel, implementation of the terminal device is simple, power consumption and heat dissipation are low, and management of the panel is simple. However, a period of time (for example, 2 to 3 ms) needs to be reserved for panel activation and switching. Consequently, system efficiency is reduced. For simultaneous receiving/sending of multiple antenna panels, system robustness can be improved. Therefore, system efficiency is improved. However, disposing of the multiple antenna panels increases implementation complexity of the terminal device, and causes high power consumption and heat dissipation problems.

It should be understood that related content about the antenna panel is merely for ease of understanding, and does not limit the scope of the protection of embodiments of this application. For example, in an evolution process of a future protocol, after improvement is made to an ID of an antenna panel, the improvement is still applicable to embodiments of this application.

### MPE limit on a terminal device

As described above, the FCC and the ICNIRP have a specific limit on radiation of the terminal device. For example, at a specific distance between the terminal device and a person, a radiation power or energy per unit area should be less than a specific value.

In the 3GPP Rel-15 version, because MPE is more related to an indicator limit. Therefore, the MPE is discussed in RAN4. In Rel-15, RAN4 provides two static solutions: power reduction and reporting of an uplink transmission duty ratio. Based on specific implementation, the terminal device may consider using a manner of power reduction or a manner of reporting of an uplink transmission duty ratio, or may consider using a combination of the two manners.

For example, on a premise that the reported uplink transmission duty ratio is 100%, the terminal device reduces a power to meet the MPE limit. In this way, the terminal device meets the MPE limit at any time. For example, in consideration of a maximum transmitted power or EIRP, the terminal device reports an uplink transmission duty ratio meeting the MPE limit. In this case, the terminal device can meet the MPE limit without power reduction in the case of the uplink transmission duty ratio. For example, in consideration of a maximum transmit power or EIRP, the terminal device increases a reported uplink transmission duty ratio, and the MPE limit is not met. In this case, the terminal device needs to perform power reduction in the case of the uplink transmission duty ratio. In this way, the MPE limit may also be met.

In addition, RAN4 defines in Rel-15 that an evaluation periodicity of the MPE is 1s. In this case, the terminal device may evaluate an MPE situation in any 1s periodicity. Specific evaluation depends on implementation of the terminal.

Because Rel-15 provides a static solution, the static solution cannot well adapt to a changing channel environment. Therefore, RAN4 further proposes in Rel-16 that a dynamic solution is required to solve an MPE problem. Rel-16 considers solving a problem of a radio link failure caused by the MPE. This mainly focuses on two aspects: reporting a current MPE state of the terminal device, and reporting a future MPE state (headroom and prediction) of the terminal device. An implementation includes: reporting an uplink transmission duty ratio, or reporting a power reduction value. In a RAN4 Rel-16 solution, an MPE state of the terminal device is mainly reported to the network device by the terminal device, so that the network device can perform scheduling based on the MPE limit. In addition, an MPE problem of selecting an uplink transmission based on multiple antenna panels (Multi-panel) is discussed in Rel-16 RAN1.

In Rel-17, the terminal device resolves an uplink performance loss caused by the MPE problem. By reporting power management maximum power reduction (Power Management Maximum Power Reduction, P-MPR) based on a reference signal, the network device may perform scheduling based on this. The reported reference signal is selected from a reference signal pool configured using RRC.

It can be learned from the foregoing that in an existing solution, the MPE limit on the terminal device mainly includes two solutions: a static solution and a dynamic solution.

### (1) Static solution

Specifically, Rel-15 defines the static solution to resolve the MPE problem. This solution involves two sub-solutions.

Sub-solution 1: A static UE capability is defined, and a maximum uplink transmission duty ratio is limited. A limit on an MPE indicator is met by controlling sending time of the terminal device, as shown by the following format:
maxUplinkDutyCycle-FR2 ENUMERATED {n15, n20, n25, n30, n40, n50, n60, n70, n80, n90, n100} OPTIONAL ]]
Sub-solution 2: A power reduction mechanism, that is, P-MPR is defined. An uplink transmit power is controlled to meet a limit on an MPE indicator.

The foregoing two sub-solutions may separately resolve the MPE problem, or may be combined to meet a limit on an MPE indicator. This specifically depends on a configuration of the network device and implementation of the terminal device.

For example, if maxUplinkDutyCycle-FR2 is reported in the sub-solution 1, and when an uplink transmission duty ratio of the terminal device in any 1s evaluation periodicity is greater than a reported capability value, the terminal device performs power reduction, that is, P-MPR based on uplink scheduling. For example, if maxUplinkDutyCycle-FR2 is not reported in the sub-solution 1, the terminal device may directly meet the MPE limit through power reduction.

### (2) Dynamic solution

Rel-16/17 proposes some MPE reporting solutions, such as the following example solutions.

In an example, when the MPE problem occurs, the terminal device reports, after considering the MPE problem, a beam or a panel for sending data. For another example, when the MPE problem occurs, the terminal device carries, based on the beam, the panel, or the terminal device, a power reduction value by using a power headroom report (Power Headroom Report, PHR). In still another example, the terminal device reports power headroom or energy headroom. In yet another example, the terminal device reports MPE alert (alert) signaling. For example, this may be implemented by using an alert message of RRC or a 'P' bit of a MAC-CE. In still yet another example, the terminal device reports an uplink transmission duty ratio. Therefore, the network device may calculate and determine a subsequent scheduling state based on any one of the foregoing reporting of the terminal device.

However, in the foregoing static solution, although it can be ensured that the terminal device always meets the MPE limit, a usage range of the terminal device is limited, and a dynamic scenario cannot be met. Although the foregoing dynamic solution can meet the dynamic scenario, dynamic signaling is added, and reporting reliability after the MPE occurs is poor.

In addition, when the terminal device reports the power reduction value based on the reference signal, a binding relationship between the reference signal and an antenna panel cannot be determined, and may depend on a binding relationship reported by the terminal device (where a function of reporting the binding relationship needs to be supported), or may depend on implementation of the terminal, and the network device cannot learn of the binding relationship. Therefore, the network device cannot implement scheduling, sending, and/or receiving based on the antenna panel to improve a performance loss caused by the MPE problem.

In view of this, in embodiments of this application, the terminal device may determine and report the binding relationship, which is specifically the binding relationship between the reference signal and the antenna panel based on the power reduction value of the reference signal, so that the network device can perform scheduling and/or receiving based on the antenna panel, thereby improving the performance loss caused by the MPE problem.

For example, a function supported by the terminal device may be defined, for example, including:
(a1) supporting a fast switching function based on the antenna panel;
(b 1) supporting multiple antenna panels for uplink in feature group (feature group) 23-1-4;
(c1) supporting reporting of a capability value or a capability value set; and
(d1) supporting reporting of a binding relationship between a reference signal and a capability value or a capability value set.

It may be understood that, if the terminal device does not support one of (a1) to (d1), the binding relationship that is between the antenna panel and the reference signal associated with the power reduction value, and that is reported by the terminal device depends on implementation of the terminal, and the network device cannot learn of the binding relationship.

In some embodiments of this application, if the terminal device supports at least one of (a1) to (d1), the terminal device may send the binding relationship between the reference signal and the antenna panel to the network device, so that the network device can learn of the binding relationship that is between the reference signal and the antenna panel and that is of the terminal device; and/or the network device can learn of the binding relationship that is between the antenna panel and the reference signal associated with the power reduction value, and that is reported by the terminal device.

It should be noted that the binding relationship in embodiments of this application may include the reference signal and the antenna panel, or the binding relationship may include a beam and the antenna panel. The antenna panel may be identified using a capability value or a capability value set. It may be understood that the binding relationship may include a reference signal and a capability value (or a capability value set), or the binding relationship may include a beam and a capability value (or a capability value set). To simplify the illustration, an example in which the binding relationship includes "the reference signal and the antenna panel" is used for description. Other descriptions are similar.

In some embodiments of this application, on a premise of supporting at least one of (a1) to (d1), the terminal device may support at least one of the following (a2) to (d2):
(a2) supporting a Rel-17 MPE solution;
(b2) supporting reporting of a power reduction value based on a reference signal;
(c2) supporting an MPE removal function in feature group 23-1-3; or
(d2) supporting a PHR including a reference signal indication and a power reduction value.

For example, a reference signal reported in MPE P-MPR may be a reference signal in a candidate resource pool. For example, a reference signal reported in MPE P-MPR is a beam measurement reference signal. Optionally, the reference signal in the candidate resource pool is a beam measurement reference signal. For example, in a current protocol, an implicit configuration manner of a CSI-RS used for beam management is: neither a repetition nor a TRS is configured for the CSI-RS. However, an SRS is configured for beam management and the like.

For example, the reference signal reported in the MPE P-MPR may be the reference signal in the candidate resource pool. For example, reference signals reported in the MPE P-MPR are sent by multiple transmission reception points (TRPs). For example, reference signals reported in the MPE P-MPR are sent by different cells. Optionally, the reference signal in the candidate resource pool is the beam measurement reference signal. Optionally, reference signals in the candidate resource pool are sent by multiple transmission reception points (TRPs). Optionally, reference signals in the candidate resource pool are sent by different cells. For example, reference signals in the candidate resource pool are reference signals configured by different TRPs, or reference signals of different resource sets, or reference signals respectively sent by a cell 1 and a cell 2. The cell 1 and the cell 2 may have a same physical cell identifier or different physical cell identifiers (Physical cell IDs, PCIs).

In some examples, the terminal device may send a binding relationship between the reference signal in the candidate resource pool and the antenna panel to the network device. In some examples, the terminal device may send, to the network device, a binding relationship between the antenna panel and the reference signal reported in the MPE P-MPR. In some examples, the terminal device may send, to the network device, a binding relationship between the antenna panel and the reference signal associated with the reported power reduction value. The antenna panel may be identified using a capability value or a capability value set. Optionally, the binding relationship is carried in a beam measurement report. Therefore, based on the binding relationship, the network device may perform scheduling, sending, and/or receiving based on the panel.

For example, the reference signal associated with the reported power reduction value may be a reference signal in a candidate resource pool or a beam measurement reference signal. Optionally, the reference signal in the candidate resource pool is a beam measurement reference signal. In some examples, the terminal device may send the power reduction value (for example, (b2) or (d2)) to the network device, so that the network device can determine the reference signal associated with the reported power reduction value. Further, the network device may determine, based on the foregoing binding relationship, the antenna panel to which the reference signal associated with the reported power reduction value is bound. Therefore, based on the binding relationship, the network device may perform scheduling, sending, and/or receiving based on the panel.

In this manner, the network device can obtain the binding relationship that is between the reference signal and the antenna panel and that is reported by the terminal device, and then the network device can implicitly or indirectly determine an association relationship between the antenna panel and the power reduction value based on the power reduction value reported by the terminal device. Therefore, the network device can perform scheduling, sending, and/or receiving based on antenna panel switching.

As described above, the terminal device may identify the antenna panel by reporting the capability value or the capability value set. Alternatively, the terminal device may report the capability value or the capability value set and the reference signal and a corresponding measured value, so that the network device obtains the binding relationship between the reference signal and the antenna panel.

In some embodiments of this application, at least one of the following may be defined or configured: effective time (referred to as first effective time below) of the binding relationship, effective time (referred to as second effective time below) of at least one antenna panel of the terminal device being in an active state, or effective time (referred to as third effective time below) of a unified TCI.

For example, in some other embodiments, the terminal device may send the first effective time of the binding relationship to the network device. For example, in some other embodiments, the terminal device may send the second effective time about the active state of the at least one antenna panel of the terminal device to the network device.

It may be understood that indication information of the first effective time or the second effective time may be in same signaling as the binding relationship, and is sent by the terminal device to the network device. Alternatively, the indication information of the first effective time or the second effective time and the binding relationship may be separately sent by the terminal device to the network device in different signaling. This is not limited in this application.

For example, in some other embodiments, the terminal device may not send the indication information of the first effective time or the second effective time to the network device. On the contrary, the terminal device may determine the first effective time or the second effective time according to a pre-negotiated or predefined rule. Optionally, a time length of the first effective time or the second effective time may be predefined, or may be preconfigured by the network device.

For example, the third effective time may be indicated by the network device to the terminal device by using signaling.

Optionally, the first effective time, the second effective time, or the third effective time each may include a start moment and a time length.

In some examples, a start moment of the first effective time or the second effective time may be determined based on a moment of sending a report by the terminal device or an acknowledgment moment of the report. For example, a last symbol of any channel (PUCCH or PUSCH) that carries the following information (a capability value, a capability value set, or a reference signal and a corresponding measured value) and that is sent by the terminal device, or a last symbol of a channel carrying an acknowledgement responding to any channel (PUCCH or PUSCH) that carries the following information (a capability value, a capability value set, or a reference signal and a corresponding measured value) and that is sent by the terminal device may be determined, and the start moment of the first effective time or the second effective time may be determined to be X1 time units after the last symbol. X1 is greater than or equal to 0. For example, X1 may be a non-negative integer. The time unit may be any one of the following: a symbol, a slot, a subframe, a millisecond, a second, or the like.

In some examples, the start moment of the first effective time or the second effective time may be determined using time of signaling based on TCI indication or TCI activation or time of acknowledgment signaling. For example, the start moment of the first effective time or the second effective time may be X2 time units after an acknowledgment moment. X2 is greater than or equal to 0. For example, X2 may be a non-negative integer. The time unit may be any one of the following: a symbol, a slot, a subframe, a millisecond, a second, or the like. In an example, the acknowledgment moment may be a moment at which a TCI is configured based on RRC or a TCI is reconfigured based on RRC, for example, may be a last symbol of a PUCCH/PUSCH carrying an/a ACK/NACK (for a PDSCH for the RRC). In an example, the acknowledgment moment may be a moment at which at least one TCI selected based on a MAC-CE from TCIs configured or reconfigured using RRC is activated, for example, may be a last symbol of a PUCCH/PUSCH carrying an/a ACK/NACK (a PDSCH for the MAC-CE). In an example, the acknowledgment moment may be a moment at which a TCI selected based on DCI from at least one TCI activated by using a MAC-CE is indicated, for example, may be a last symbol of a PUCCH/PUSCH carrying an/a ACK/NACK (a PDCCH for the DCI).

In some examples, a start moment of the third effective time may be determined based on a sending moment or an acknowledgment moment of specific signaling. For example, the start moment of the third effective time may be X3 time units after the sending moment or the acknowledgment moment of the specific signaling. X3 is greater than or equal to 0. For example, X3 may be a non-negative integer. The time unit may be any one of the following: a symbol, a slot, a subframe, a millisecond, a second, or the like. It should be noted that the specific signaling is not limited in embodiments of this application, for example, may be a DCI indication or other signaling.

In some embodiments of this application, the network device may configure, for the terminal device, information used to determine the effective time (at least one of the first effective time, the second effective time, and the third effective time).

Optionally, in some examples, the configured information may indicate one set. The set may be referred to as a set used to determine the effective time. For example, the set may be used to determine at least one of X1, X2, and X3. For example, the set may include at least one first duration associated with a MAC-CE indication, and/or at least one second duration associated with a DCI indication. For example, an example of the first duration and the second duration included in the set is shown in Table 4 below.

**Table 4**

| | |
|---|---|
| MAC-CE indication | 3 (ms) |
| DCI indication | 14, 28, 48, 224, 336 (symbol) |

Optionally, in some other examples, the configured information may indicate two or more sets. In this manner, the terminal device may select, based on an actual requirement, a set in a scenario such as antenna panel switching or inter-cell beam measurement to determine the effective time.

The following uses two sets as an example for description, for example, the two sets include a first set and a second set. For example, the first set may include at least one first duration associated with a MAC-CE indication, and/or at least one second duration associated with a DCI indication. The second set may include at least one third duration associated with the MAC-CE indication, and/or at least one fourth duration associated with the DCI indication. For example, the first set and the second set are shown in Table 5 below.

**Table 5**

| | | |
|---|---|---|
| First set | MAC-CE indication | 3 (ms) |
| | DCI indication | 14, 28, 48 (symbol) |
| Second set | DCI indication | 224, 336 (symbol) |

Optionally, in some examples, the network device may indicate a quantity of configured sets by using a specific field in signaling. For example, RRC signaling includes a specific flag bit, the flag bit being a first value indicates that the quantity of configured sets is 1, and the flag bit being a second value indicates that the quantity of configured sets is 2.

Optionally, in some examples, the terminal device may send capability information to the network device. The capability information may include at least one of the following: whether the one set is supported, whether the two or more sets are supported, and a specific value (or a value set) of the supported DCI indication.

Optionally, in some examples, the network device may send the configured information to the terminal device based on the capability information of the terminal device.

For example, if the capability information of the terminal device indicates that the terminal device does not support the two sets, the configured information sent by the network device includes only one set. For example, if the capability information of the terminal device indicates that the terminal device supports the two sets, the configured information sent by the network device includes one set or two sets. For example, the network device may indicate the quantity of sets in the configured information by using a specific field.

For example, if the capability information of the terminal device indicates that the specific value (or the value set) of the DCI indication supported by the terminal device includes 14, 28, and 48. In this case, optionally, 224 and 336 may be included in or removed from a last column of Table 4 shown above. In this manner, a device capability can be fully considered, validity of the configured information can be ensured, and communication efficiency can be improved.

It should be noted that the values shown in Table 4 or Table 5 are merely examples. During specific implementation, another value may be used. This is not limited in this application.

Further, it may be understood that the terminal device may obtain, based on the configured information, the set used to determine the effective time (at least one of the first effective time, the second effective time, and the third effective time). Further, a corresponding value, such as X1, X2, or X3 described above, may be determined from the set.

Optionally, in some embodiments, the terminal device and the network device may maintain the binding relationship between the reference signal and the antenna panel, so that the network device can perform scheduling, sending, and/or receiving based on the panel, thereby improving communication efficiency.

It may be understood that, in some other examples, the effective time and the active state may be equivalently understood. For example, the corresponding antenna panel is in the active state within the effective time. For example, when a specific antenna panel is in an active state, a binding relationship associated with the antenna panel is within effective time. In other words, in embodiments of this application, the effective time of the binding relationship may be the same as or different from time of the active state of the antenna panel.

In a multiple antenna panel scenario, multiple binding relationships corresponding to the multiple antenna panels may be included. In some examples, the terminal device and the network device may maintain/track a part or all of the multiple binding relationships. For example, for at least one activated TCI, a part of reference signals included in the at least one TCI may be determined, so that binding relationships associated with the part of reference signals may be maintained or tracked. Optionally, the at least one activated TCI may be configured using RRC, or may be activated using an MC-CE, or may be indicated using DCI. This is not limited in this application.

Optionally, antenna panels related to the binding relationships associated with the part of reference signals may be further activated. In other words, the antenna panels in the maintained or tracked binding relationships may be enabled to be in an active state. In this manner, the active state of the antenna panels may be determined based on the at least one activated TCI, so that the first effective time or the second effective time described above does not need to be negotiated, defined, or configured. This can reduce signaling overheads and improve communication efficiency.

It should be understood that the foregoing content is merely intended to help a person skilled in the art better understand embodiments of this application, instead of limiting the scope of embodiments of this application. A person skilled in the art may make various modifications, variations, combinations, or the like based on the foregoing content. A solution obtained through such a modification, variation, or combination also falls within the scope of embodiments of this application.

FIG. 11 is a schematic block diagram of a communication apparatus 1100 according to some embodiments of this application. The apparatus 1100 may be implemented as the terminal device 120 shown in FIG. 1, or may be implemented as the terminal device 202 shown in FIG. 2, or may be implemented as a part (for example, a chip) of the terminal device 120/202. This is not limited in this application.

As shown in FIG. 11, the apparatus 1100 includes a receiving module 1110 and a sending module 1120. Optionally, the apparatus 1100 further includes a determining module 1130.

The receiving module 1110 is configured to receive multiple TCIs from a network device. The receiving module 1110 is further configured to receive at least one message from the network device, where the at least one message is used to determine at least one TCI and at least two TCIs of the multiple TCIs, the at least one TCI is used for transmission of a first channel, and the at least two TCIs are used for transmission of a second channel. The receiving module 1110 and/or the sending module 1120 are/is configured to receive and/or send the first channel based on the at least one TCI; and/or the receiving module 1110 and/or the sending module 1120 are/is configured to receive and/or send the second channel based on the at least two TCIs.

Optionally, the at least one message includes a first message, and the first message indicates the at least one TCI and the at least two TCIs. Optionally, the at least one message includes a second message and a third message, the second message indicates the at least one TCI, and the third message indicates the at least one TCI or the at least two TCIs.

Optionally, the at least one message includes a fourth message and a fifth message, the fourth message indicates the at least one TCI, and the fifth message indicates at least another TCI. The determining module 1130 is configured to: determine the at least one TCI based on the fourth message, and determine the at least two TCIs based on the fourth message and the fifth message, where the at least two TCIs include the at least one TCI and the another TCI. For example, the another TCI may be different from the at least one TCI.

Optionally, the at least one message includes a sixth message, and the sixth message indicates at least a part of TCIs of the multiple TCIs. The determining module 1130 is configured to determine the at least one TCI and the at least two TCIs from at least the part of TCIs based on a preset criterion.

For example, the preset criterion includes at least one of the following: respective identifiers of at least the part of TCIs; an order of at least the part of TCIs; respective activation time of at least the part of TCIs; an order of activation time of at least the part of TCIs; respective effective time of at least the part of TCIs; or an order of effective time of at least the part of TCIs.

In some embodiments, the receiving module 1110 is further configured to receive a seventh message from the network device, where the seventh message indicates the preset criterion. In some embodiments, the sixth message further indicates the preset criterion.

In some embodiments, the sending module 1120 may be further configured to send capability information to the network device, where the capability information indicates a preset criterion supported by the apparatus 1100.

The apparatus 1100 in FIG. 11 can be configured to implement the processes described from a perspective of the terminal device 202 in FIG. 2 to FIG. 8. For brevity, details are not described herein again.

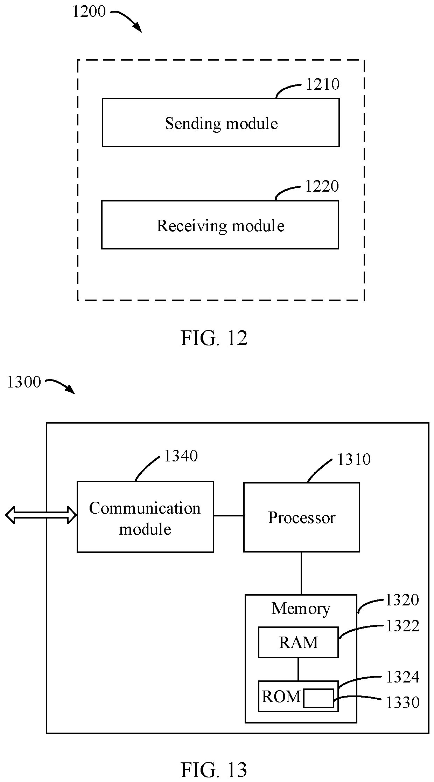

FIG. 12 is a schematic block diagram of a communication apparatus 1200 according to some embodiments of this application. The apparatus 1200 may be implemented as the access network device 110 or the TRP 130 shown in FIG. 1, or may be implemented as the network device 201 shown in FIG. 2, or may be implemented as the access network device 110, the TRP 130, or a part (for example, a chip) of the network device 201. This is not limited in this application.

As shown in FIG. 12, the apparatus 1200 includes a sending module 1210 and a receiving module 1220.

The sending module 1210 is configured to send multiple TCIs to a terminal device. The sending module 1210 is further configured to send at least one message to the terminal device, where the at least one message is used to determine at least one TCI and at least two TCIs of the multiple TCIs, the at least one TCI is used for transmission of a first channel, and the at least two TCIs are used for transmission of a second channel. The receiving module 1220 and/or the sending module 1210 are/is configured to receive and/or send the first channel based on the at least one TCI; and/or the receiving module 1220 and/or the sending module 1210 are/is configured to receive and/or send the second channel based on the at least two TCIs.

Optionally, the at least one message includes a first message, and the first message indicates the at least one TCI and the at least two TCIs. Optionally, the at least one message includes a second message and a third message, the second message indicates the at least one TCI, and the third message indicates the at least one TCI or the at least two TCIs. Optionally, the at least one message includes a fourth message and a fifth message, the fourth message indicates the at least one TCI, and the fifth message indicates at least another TCI. For example, the another TCI may be different from the at least one TCI.

Optionally, the at least one message includes a sixth message, and the sixth message indicates at least a part of TCIs of the multiple TCIs. The sixth message is used by the terminal device to select the at least one TCI and the at least two TCIs from at least the part of TCIs based on a preset criterion.

For example, the preset criterion includes at least one of the following: respective identifiers of at least the part of TCIs; an order of at least the part of TCIs; respective activation time of at least the part of TCIs; an order of activation time of at least the part of TCIs; respective effective time of at least the part of TCIs; or an order of effective time of at least the part of TCIs.

In some embodiments, the sending module 1210 may be further configured to send a seventh message to the terminal device, where the seventh message indicates the preset criterion. In some embodiments, the sixth message further indicates the preset criterion.

In some embodiments, the receiving module 1220 may be further configured to receive capability information from the terminal device, where the capability information indicates a preset criterion supported by the terminal device.

The apparatus 1200 in FIG. 12 can be configured to implement the processes described from a perspective of the network device 201 in FIG. 2 to FIG. 8. For brevity, details are not described herein again.

Division into the modules or the units in embodiments of this application is an example, is merely logical function division, and may be other division during actual implementation. In addition, functional units in embodiments of this application may be integrated into one unit, each of the units may exist alone physically, or two or more units may be integrated into one unit. The integrated unit may be implemented in a form of hardware, or may be implemented in a form of a software functional unit.

FIG. 13 is a schematic block diagram of an example device 1300 that may be configured to implement an embodiment of this application. The device 1300 may be implemented or included in the terminal device 120 in FIG. 1 or the terminal device 202 in FIG. 2, or the device 1300 may be implemented or included in the access network device 110 or the TRP 130 in FIG. 1 or the network device 201 in FIG. 2.

As shown in the figure, the device 1300 includes one or more processors 1310, one or more memories 1320 coupled to the processor 1310, and a communication module 1340 coupled to the processor 1310.

The communication module 1340 may be configured to perform bidirectional communication. The communication module 1340 may have at least one communication interface for communication. The communication interface may include any interface necessary for communicating with another device.

The processor 1310 may be any type applicable to a local technology network, and may include but is not limited to at least one of the following: one or more of a general-purpose computer, a dedicated computer, a microcontroller, a digital signal processor (Digital Signal Processor, DSP), a control-based computer, or a controller-based multi-core controller architecture. The device 1300 may have multiple processors, such as an application-specific integrated circuit chip, which in time belongs to a clock synchronized with a main processor.

The memory 1320 may include one or more non-volatile memories and one or more volatile memories. An example of the non-volatile memory includes but is not limited to at least one of the following: a read-only memory (Read-Only Memory, ROM) 1324, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. Examples of the volatile memory include but are not limited to at least one of the following: a random access memory (Random Access Memory, RAM) 1322, or another volatile memory that does not persist during power-off duration.

A computer program 1330 includes computer-executable instructions performed by an associated processor 1310. The program 1330 may be stored in the ROM 1324. The processor 1310 may perform any proper action and processing by loading the program 1330 into the RAM 1322.

Embodiments of this application may be implemented using the program 1330, so that the device 1300 can perform any process discussed with reference to FIG. 2. Embodiments of this application may alternatively be implemented using hardware or a combination of software and hardware.

The program 1330 may be tangibly included in a computer-readable medium, and the computer-readable medium may be included in the device 1300 (for example, in the memory 1320) or another storage device that is accessible by the device 1300. The program 1330 may be loaded from the computer-readable medium to the RAM 1322 for execution. The computer-readable medium may include any type of tangible non-volatile memory, for example, a ROM, an EPROM, a flash memory, a hard disk, a CD, a DVD, or the like.

In some embodiments, the communication module 1340 in the device 1300 may be implemented as a transmitter and a receiver (or a transceiver), and the communication module 1340 may be configured to send/receive multiple TCIs, at least one message, capability information, and the like. In addition, the device 1300 may further include one or more of the following: a scheduler, a controller, and a/an radio frequency/antenna. Details are not described in this application.

For example, the device 1300 in FIG. 13 may be implemented as an electronic device, or may be implemented as a chip or a chip system in an electronic device. This is not limited in embodiments of this application.

An embodiment of this application further provides a chip. The chip may include an input interface, an output interface, and a processing circuit. In this embodiment of this application, the input interface and the output interface may complete signaling or data interaction, and the processing circuit may complete generation and processing of signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and function in any one of the foregoing embodiments.

An embodiment of this application further provides a computer program product including instructions. When the computer program product runs on a computer, the computer is enabled to perform the method and function in any one of the foregoing embodiments.

An embodiment of this application further provides a computer-readable storage medium. The computer-readable storage medium stores computer instructions. When a processor runs the instructions, the processor is enabled to perform the method and function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this application are shown and described as schematic block diagrams or flowcharts, or represented by some other illustrations, it should be understood that the blocks, apparatuses, systems, technologies, or methods described in this specification may be implemented as, for example, non-limiting examples: hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, such as instructions included in a program module, which are executed in a device on a real or virtual target processor, to perform the process/method described above with reference to the accompanying drawings. Usually, the program module includes a routine, a program, a library, an object, a class, a component, a data structure, or the like that executes a specific task or implements a specific abstract data type. In various embodiments, functions of program modules may be combined or split between the program modules as required. Machine-executable instructions for the program module may be executed locally or in a distributed device. In the distributed device, the program module may be locally located and located in a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of this application, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any proper combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any proper combination thereof.

In addition, although the operations of the methods in this application are described in a particular order in the accompanying drawings, this does not require or imply that these operations need to be performed in the particular order or that all of the shown operations need to be performed to achieve a desired result. Instead, the execution order of the steps depicted in the flowchart may change. Additionally or alternatively, some steps may be omitted, multiple steps may be combined into one step for execution, and/or one step may be broken down into multiple steps for execution. It should further be noted that features and functions of two or more apparatuses according to this application may be specific in one apparatus. Instead, features and functions of one apparatus described above may be further specific in multiple apparatuses.

The foregoing has described the implementations of this application. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A communication method, comprising:
receiving multiple transmission configuration indicators TCIs from a network device;
receiving at least one message from the network device, wherein the at least one message is used to determine at least one TCI and at least two TCIs of the multiple TCIs, the at least one TCI is used for transmission of a first channel, and the at least two TCIs are used for transmission of a second channel;
receiving and/or sending the first channel based on the at least one TCI; and/or
receiving and/or sending the second channel based on the at least two TCIs.

2. The method according to claim 1, wherein the at least one message comprises a first message, and the first message indicates the at least one TCI and the at least two TCIs.

3. The method according to claim 1, wherein the at least one message comprises a second message and a third message, the second message indicates the at least one TCI, and the third message indicates the at least one TCI or the at least two TCIs.

4. The method according to claim 1, wherein the at least one message comprises a fourth message and a fifth message, the fourth message indicates the at least one TCI, and the fifth message indicates at least another TCI; and
the method further comprises:
determining the at least one TCI based on the fourth message; and
determining the at least two TCIs based on the fourth message and the fifth message.

5. The method according to claim 1, wherein the at least one message comprises a sixth message, and the sixth message indicates at least a part of TCIs of the multiple TCIs; and
the method further comprises:
determining the at least one TCI and/or the at least two TCIs from at least the part of TCIs based on a preset criterion.

6. The method according to claim 5, wherein the preset criterion comprises at least one of the following:
respective identifiers of at least the part of TCIs;
an order of at least the part of TCIs;
respective activation time of at least the part of TCIs;
an order of activation time of at least the part of TCIs;
respective effective time of at least the part of TCIs; or
an order of effective time of at least the part of TCIs.

7. The method according to claim 5 or 6, further comprising:
receiving a seventh message from the network device, wherein the seventh message indicates the preset criterion.

8. The method according to claim 5 or 6, wherein the sixth message further indicates the preset criterion.

9. The method according to any one of claims 5 to 8, further comprising:
sending capability information to the network device, wherein the capability information indicates a preset criterion supported by a terminal device.

10. A communication method, comprising:
sending multiple transmission configuration indicators TCIs to a terminal device;
sending at least one message to the terminal device, wherein the at least one message is used to determine at least one TCI and at least two TCIs of the multiple TCIs, the at least one TCI is used for transmission of a first channel, and the at least two TCIs are used for transmission of a second channel;
receiving and/or sending the first channel based on the at least one TCI; and/or
receiving and/or sending the second channel based on the at least two TCIs.

11. The method according to claim 10, wherein the at least one message comprises a first message, and the first message indicates the at least one TCI and the at least two TCIs.

12. The method according to claim 10, wherein the at least one message comprises a second message and a third message, the second message indicates the at least one TCI, and the third message indicates the at least one TCI or the at least two TCIs.

13. The method according to claim 10, wherein the at least one message comprises a fourth message and a fifth message, the fourth message indicates the at least one TCI, and the fifth message indicates at least another TCI.

14. The method according to claim 13, wherein the at least one message comprises a sixth message, the sixth message indicates at least a part of TCIs of the multiple TCIs, and the sixth message is used by the terminal device to select the at least one TCI and/or the at least two TCIs from at least the part of TCIs based on a preset criterion.

15. The method according to claim 14, wherein the preset criterion comprises at least one of the following:
respective identifiers of at least the part of TCIs;
an order of at least the part of TCIs;
respective activation time of at least the part of TCIs;
an order of activation time of at least the part of TCIs;
respective effective time of at least the part of TCIs; or
an order of effective time of at least the part of TCIs.

16. The method according to claim 14 or 15, further comprising:
sending a seventh message to the terminal device, wherein the seventh message indicates the preset criterion.

17. The method according to claim 14 or 15, wherein the sixth message further indicates the preset criterion.

18. The method according to any one of claims 14 to 17, further comprising:
receiving capability information from the terminal device, wherein the capability information indicates a preset criterion supported by the terminal device.

19. A communication apparatus, comprising:
a receiving module, configured to receive multiple transmission configuration indicators TCIs from a network device, wherein
the receiving module is further configured to receive at least one message from the network device, wherein the at least one message is used to determine at least one TCI and at least two TCIs of the multiple TCIs, the at least one TCI is used for transmission of a first channel, and the at least two TCIs are used for transmission of a second channel; and
the receiving module and/or a sending module are/is configured to:
receive and/or send the first channel based on the at least one TCI; and/or
receive and/or send the second channel based on the at least two TCIs.

20. The apparatus according to claim 19, wherein the at least one message comprises a first message, and the first message indicates the at least one TCI and the at least two TCIs.

21. The apparatus according to claim 19, wherein the at least one message comprises a second message and a third message, the second message indicates the at least one TCI, and the third message indicates the at least one TCI or the at least two TCIs.

22. The apparatus according to claim 19, wherein the at least one message comprises a fourth message and a fifth message, the fourth message indicates the at least one TCI, and the fifth message indicates at least another TCI; and
the apparatus further comprises a determining module, configured to:
determine the at least one TCI based on the fourth message; and
determine the at least two TCIs based on the fourth message and the fifth message.

23. The apparatus according to claim 19, wherein the at least one message comprises a sixth message, and the sixth message indicates at least a part of TCIs of the multiple TCIs; and
the apparatus further comprises a determining module, configured to determine the at least one TCI and/or the at least two TCIs from at least the part of TCIs based on a preset criterion.

24. The apparatus according to claim 23, wherein the preset criterion comprises at least one of the following:
respective identifiers of at least the part of TCIs;
an order of at least the part of TCIs;
respective activation time of at least the part of TCIs;
an order of activation time of at least the part of TCIs;
respective effective time of at least the part of TCIs; or
an order of effective time of at least the part of TCIs.

25. The apparatus according to claim 23 or 24, wherein the receiving module is further configured to receive a seventh message from the network device, wherein the seventh message indicates the preset criterion.

26. The apparatus according to claim 23 or 24, wherein the sixth message further indicates the preset criterion.

27. The apparatus according to any one of claims 23 to 26, wherein the sending module is further configured to send capability information to the network device, wherein the capability information indicates a preset criterion supported by a terminal device.

28. A communication apparatus, comprising:
a sending module, configured to send multiple transmission configuration indicators TCIs to a terminal device, wherein
the sending module is further configured to send at least one message to the terminal device, wherein the at least one message is used to determine at least one TCI and at least two TCIs of the multiple TCIs, the at least one TCI is used for transmission of a first channel, and the at least two TCIs are used for transmission of a second channel; and
a receiving module and/or the sending module are/is configured to:
receive and/or send the first channel based on the at least one TCI; and/or
receive and/or send the second channel based on the at least two TCIs.

29. The apparatus according to claim 28, wherein the at least one message comprises a first message, and the first message indicates the at least one TCI and the at least two TCIs.

30. The apparatus according to claim 28, wherein the at least one message comprises a second message and a third message, the second message indicates the at least one TCI, and the third message indicates the at least one TCI or the at least two TCIs.

31. The apparatus according to claim 28, wherein the at least one message comprises a fourth message and a fifth message, the fourth message indicates the at least one TCI, and the fifth message indicates at least another TCI.

32. The apparatus according to claim 31, wherein the at least one message comprises a sixth message, the sixth message indicates at least a part of TCIs of the multiple TCIs, and the sixth message is used by the terminal device to select the at least one TCI and/or the at least two TCIs from at least the part of TCIs based on a preset criterion.

33. The apparatus according to claim 32, wherein the preset criterion comprises at least one of the following:
respective identifiers of at least the part of TCIs;
an order of at least the part of TCIs;
respective activation time of at least the part of TCIs;
an order of activation time of at least the part of TCIs;
respective effective time of at least the part of TCIs; or
an order of effective time of at least the part of TCIs.

34. The apparatus according to claim 32 or 33, wherein the sending module is further configured to send a seventh message to the terminal device, wherein the seventh message indicates the preset criterion.

35. The apparatus according to claim 32 or 33, wherein the sixth message further indicates the preset criterion.

36. The apparatus according to any one of claims 32 to 35, wherein the receiving module is further configured to receive capability information from the terminal device, wherein the capability information indicates a preset criterion supported by the terminal device.

37. A communication apparatus, comprising a processor, wherein the processor is configured to execute instructions stored in a memory; and when the instructions are executed by the processor, the communication apparatus is enabled to implement the method according to any one of claims 1 to 18.

38. A computer-readable storage medium, wherein the computer-readable storage medium stores computer-executable instructions; and when the computer-executable instructions are executed by a processor, the method according to any one of claims 1 to 18 is implemented.

39. A computer program product, wherein the computer program product comprises computer-executable instructions; and when the computer-executable instructions are executed, the method according to any one of claims 1 to 18 is implemented.

40. A chip, comprising a processing circuit, configured to perform the method according to any one of claims 1 to 18.
